# EUROPÄISCHE PATENTSCHRIFT

(11) **EP 2 660 127 B1**
(45) Veröffentlichungstag und Bekanntmachung des Hinweises auf die Patenterteilung: **21.06.2017**
(21) Anmeldenummer: 13154036.1
(22) Anmeldetag: 05.02.2013
(51) Int. Cl.: B62D 13/00, B62D 53/00, B62D 13/02

(54) **Fahrwerkeinheit und Moduleinheit für einen Routenzug**
Running gear unit and modular unit for a tugger train
Unité de châssis et unité de module pour un chariot tracteur

(30) Priorität: 04.05.2012 DE 102012207433; 16.01.2013 DE 102013200612
(43) Veröffentlichungstag der Anmeldung: 06.11.2013
(73) Patentinhaber: Neumaier Industry GmbH & Co. KG, 77716 Hofstetten (DE)
(72) Erfinder: Neumaier, Bernd, 77716 Hofstetten (DE)
(74) Vertreter: Patentanwälte Ruff, Wilhelm, Beier, Dauster & Partner mbB

(56) Entgegenhaltungen:
- US-A- 776 994
- US-A- 1 416 613
- US-B1- 6 193 257
- US-B1- 7 137 641

## Beschreibung

Die Erfindung bezieht sich auf eine Moduleinheit für einen Routenzug. Der Begriff "Routenzug" bezeichnet vorliegend eine beliebige Anzahl von auf Rädern fahrenden, zu einem Zug hintereinander gekoppelten modularen Einheiten, bei denen es sich herkömmlicherweise um entsprechend ausgebildete einzelne Wagen oder Anhänger handelt.

Routenzüge werden beispielsweise für den Lastentransport in Lagergassen großer Lagerhallen verwendet und werden häufig auch mit Begriffen wie Trailerzüge, Gespanne, Wagenverbund, Transportzüge etc. bezeichnet. Herkömmlicherweise bilden die einzelnen Wagen die Moduleinheiten, aus denen der Routenzug dadurch zusammengestellt wird, dass ein hinterer Wagen (Hinterwagen) durch eine vorne angebrachte Deichsel mit einem vorderen Wagen (Vorderwagen) gekoppelt wird, wozu der Vorderwagen an seinem hinteren Ende eine passende Deichselankopplung aufweist. Der einzelne Wagen beinhaltet typisch ein Fahrwerk mit nur einem oder mit einem vorderen und hinteren Fahrwerkteil, der jeweils ein oder mehrere Räder aufweist, und einen sich darauf abstützenden Lastaufnahmerahmen, der die zu transportierende Last aufnimmt, z.B. einen Container mit standardisierter Größe. Das Be- und Entladen erfolgt an den im Routenzug frei zugänglichen Seiten des Wagens, je nach Systemauslegung einseitig oder beidseitig. Weit verbreitet sind Systeme, bei denen die Vorderräder durch die Schwenkbewegung der Deichsel gelenkt werden.

Ein wichtiger Gesichtspunkt speziell auch bei der Anwendung in Lagerhallengassen ist die Spurtreue, d.h. nachfolgende Wagen sollten so gut wie möglich der Fahrspur vorausfahrender Wagen folgen, insbesondere in Kurven, ohne diese merklich abzuschneiden bzw. abzukürzen.

Verschiedene herkömmliche Routenzüge dieser und ähnlicher Art sind beispielsweise in den Offenlegungsschriften DE 10 2007 051 953 A1 und EP 2 319 745 A2 sowie den Patentschriften US 6,193,257 B1, US 7,137,641 B1, US 1,416,613, US 776,994, EP 1 743 828 B1 und EP 2 226 240 B1 beschrieben. Dabei offenbaren die beiden letztgenannten Patentschriften Routenzugsysteme, bei denen zusätzlich zu den Vorderrädern auch die Hinterräder gelenkt werden, wozu sie über eine mechanische Zwangskopplung mit der Vorderradlenkung verbunden sind. Diese mechanische Zwangskopplung wird folglich über die gesamte Wagenlänge vom vorderen zum hinteren Fahrwerkteil geführt, vorzugsweise entlang eines Längsträgers des Lastaufnahmerahmens. Achsgleiche Räder sind bei den dortigen Systemen über eine Starrachse miteinander verbunden. Beim Routenzug der US 6,193,257 B1 ist pro Wagen nur ein Radpaar vorhanden, das über eine Starrachse und eine Lenkstange gelenkt wird, die um eine Hochachse schwenkbeweglich an einen festen Anlenkpunkt eines nachfolgenden Wagens angekoppelt ist, wobei dieser Anlenkpunkt gegenüber einem Deichselanlenkpunkt der beiden Wagen in Wagenlängsrichtung versetzt angeordnet ist.

Der Erfindung liegt als technisches Problem die Bereitstellung einer Fahrwerkeinheit und einer Moduleinheit für einen Routenzug zugrunde, mit denen sich bei vergleichsweise geringem konstruktivem Aufwand ein Routenzug bilden lässt, der vergleichsweise gute Fahreigenschaften, insbesondere hinsichtlich Spurtreue und Fahrstabilität auf unebenem Untergrund, aufweist.

Die Erfindung löst dieses Problem durch die Bereitstellung einer Routenzug-Moduleinheit mit den Merkmalen des Anspruchs 1.

Die dadurch charakterisierte Erfindung zeichnet sich darin aus, dass der Routenzug nicht durch lösbares Zusammenkoppeln einzelner herkömmlicher Wagen, die jeweils einen vorderen und hinteren Fahrwerkteile und einen darauf abgestützten Lastaufnahmerahmen umfassen, über eine Deichsel oder dergleichen gebildet wird, sondern durch lösbares Zusammenkoppeln der erfindungsgemäßen Moduleinheiten, die jeweils ein Fahrwerk mit einem hinteren Fahrwerkteil für einen Vorderwagen und einem vorderen Fahrwerkteil für einen Hinterwagen, einen hinteren Teil eines Lastaufnahmerahmens für den Vorderwagen und einen vorderen Teil eines Lastaufnahmerahmens für den Hinterwagen umfassen, wobei das Zusammenkoppeln zweier aufeinanderfolgender Moduleinheiten über Mittel zur Kopplung der entsprechenden Lastaufnahmerahmenteile erfolgt.

Der hintere Fahrwerkteil eines Vorderwagens und der vordere Fahrwerkteil eines Hinterwagens bilden somit integrale Bestandteile der Fahrwerkeinheit und sind über einen Lenkmechanismus gekoppelt, mit dem das oder die Vorderwagen-Hinterräder abhängig von der Stellung des vorderen Hinterwagen-Fahrwerkteils gelenkt werden. Zum Lenken der Hinterräder eines jeweiligen Wagens, der aus vorderem und hinterem Fahrwerkteil und den sich darauf abstützenden, zusammengekoppelten Lastaufnahmerahmenteilen besteht, ist somit im Gegensatz zu den eingangs erwähnten herkömmlichen Routenzugsystemen keine über die Wagenlänge vom vorderen zum hinteren Fahrwerkteil zu führende Lenkungskopplung erforderlich. Trotzdem lässt sich durch entsprechende Systemauslegung der Fahrwerkeinheit in gewünschter Weise eine optimale Spurtreue der hintereinander fahrenden Wagen erzielen. Gleichzeitig bildet diese erfindungsgemäße Lösung beste Voraussetzungen für die Erzielung optimaler Fahreigenschaften des aus Moduleinheiten mit dieser Fahrwerkeinheit aufgebauten Routenzuges. Vorteilhafte Ausgestaltungen der Moduleinheit verbessern die Be- und Entladefunktionalität für den daraus gebildeten Routenzug bzw. dessen Routenzugwagen.

Die erfindungsgemäße Moduleinheit zum Aufbau eines Routenzugs aus mehreren solchen hintereinander gekoppelten Moduleinheiten weist die erfindungsgemäße Fahrwerkeinheit und sich auf deren Fahrwerkteile abstützende Lastaufnahmerahmenteile sowie Rahmenkopplungsmittel zum lösbaren Koppeln des jeweiligen Lastaufnahmerahmenteils mit zugehörigen Lastaufnahmerahmenteilen einer vorn und/oder hinten angrenzenden Moduleinheit auf. Dies realisiert in besonders vorteilhafter Weise die erwähnte, erfindungsgemäße Routenzugbildung durch das lösbare Koppeln des vorderen und des hinteren Lastaufnahmerahmenteils eines jeweiligen Wagens statt wie herkömmlich durch lösbares Koppeln der einzelnen Wagen über eine Deichsel oder dergleichen.

In Weiterbildung der Erfindung ist der Lenkmechanismus dafür eingerichtet, für das wenigstens eine Vorderwagen-Hinterrad einen zum Drehwinkel des Vorderwagen-Fahrwerkteils relativ zum Hinterwagen-Fahrwerkteil bezüglich der Hochachse gegensinnigen Lenkwinkel einzustellen. Dies trägt zur Erzielung einer optimalen Spurtreue der hintereinander fahrenden Wagen des Routenzuges bei.

In weiterer Ausgestaltung beinhaltet der Lenkmechanismus ein Lenkgestänge, das einerseits mit dem wenigstens einen Vorderwagen-Hinterrad und andererseits mit dem Hinterwagen-Fahrwerkteil verbunden ist. Dies stellt eine konstruktiv einfache Realisierung für den Lenkmechanismus dar.

In einer Weiterbildung weist das Vorderwagen-Fahrwerkteil zwei parallele, mit dem Lenkmechanismus gekoppelte Vorderwagen-Hinterräder auf, und/oder das Hinterwagen-Fahrwerkteil weist zwei parallele, ungelenkte Hinterwagen-Vorderräder auf. Bei Kombination beider Maßnahmen bildet die Fahrwerkeinheit eine Basis zur Bildung eines Routenzuges, der zweiachsige Routenzugwagen beinhaltet, deren Hinterräder gelenkt und deren Vorderräder nicht gelenkt sind.

In einer weiteren Ausgestaltung sind die beiden Hinterwagen-Vorderräder des Hinterwagen-Fahrwerkteils an einer Pendelachse aufgehängt. Dadurch können diese beiden Räder unabhängig voneinander Bodenunebenheiten ausgleichen.

In einer vorteilhaften Weiterbildung der Erfindung ist der Hinterwagen-Fahrwerkteil um eine horizontale Längsachse kippbeweglich mit dem Vorderwagen-Fahrwerkteil gekoppelt. Auch dies trägt zur Fahrstabilität auf unebenem Gelände bei, da sich hiermit der vordere Fahrwerkteil eines Hinterwagens und der hintere Fahrwerkteil eines Vorderwagens unabhängig voneinander in ihrer Kipplage an die jeweilige Bodenneigung anpassen können.

In einer Weiterbildung der erfindungsgemäßen Moduleinheit beinhaltet der vordere und/oder der hintere Lastaufnahmerahmenteil zwei seitliche, um eine Querachse schwenkbewegliche Rahmenlängsträger. Durch das Verschwenken können die Rahmenlängsträger zwischen einer z.B. vertikalen, entkoppelten Ruhestellung und einer z.B. horizontalen, gekoppelten Funktionsstellung bewegt werden. Die Querachsen-Schwenkbeweglichkeit der Rahmenlängsträger verbessert zudem die Fahrstabilität im Routenzug beim Befahren von Bodenwellen und ähnlichen Fahrbahnunebenheiten in Fahrtrichtung.

In einer weiteren Ausgestaltung dieser Maßnahme weisen die Rahmenkopplungsmittel ein jeweiliges Koppelelement zum lösbaren Koppeln je eines vorderen und eines hinteren Rahmenlängsträgers aufeinanderfolgender Moduleinheiten auf. Wenn auf diese Weise zwei seitengleiche, vordere und hintere Rahmenlängsträger gekoppelt sind, bilden sie einen entsprechenden Längsträger des Lastaufnahmerahmens eines Routenzugwagens.

In noch weiterer Ausgestaltung sind die vorderen und/oder die hinteren Rahmenlängsträger teleskopartig längenverstellbar ausgeführt. Dies ermöglicht den Aufbau von Routenzugwagen mit variabler Wagenlänge und damit Lastaufnahmelänge.

In einer weiteren Ausgestaltung sind am vorderen und/oder am hinteren Rahmenlängsträger ein oder mehrere Lastaufnahmearme lösbar und/oder längsverschieblich gehalten. Auf diese Arme kann die vom betreffenden Routenzugwagen zu transportierende Last aufgelegt werden.

In einer weiteren Ausgestaltung der erfindungsgemäßen Moduleinheit sind die Rahmenlängsträger an einem Rahmenquerträger schwenkbeweglich angelenkt, der teleskopartig längenverstellbar ausgeführt ist. Auf diese Weise können die Routenzugwagen mit einer variablen Lastaufnahmebreite gebildet werden.

In einer Weiterbildung der Erfindung stützt sich der Rahmenquerträger des hinteren Vorderwagen-Lastaufnahmerahmenteils auf Höhe hinter einer Radachse des hinteren Vorderwagen-Fahrwerkteils auf diesem ab, und/oder der Rahmenquerträger des vorderen Hinterwagen-Lastaufnahmerahmenteils stützt sich auf Höhe vor einer Radachse des vorderen Hinterwagen-Fahrwerkteils auf diesem ab. Dies trägt zu einer hohen Stabilität des jeweiligen Routenzugwagens bei, indem sich dessen Lastaufnahmerahmen zum einen auf dem vorderen Fahrwerkteil des Wagens vor einer vorderen Radachse des Wagens und zum anderen auf dem hinteren Fahrwerkteil hinter einer hinteren Radachse des Wagens abstützt.

In einer Weiterbildung der erfindungsgemäßen Moduleinheit stützt sich der vordere Hinterwagen-Lastaufnahmerahmenteil über einen Hubmechanismus höhenbeweglich am vorderen Hinterwagen-Fahrwerkteil ab, und/oder der hintere Vorderwagen-Lastaufnahmerahmenteil stützt sich über einen Hubmechanismus am hinteren Vorderwagen-Fahrwerkteil ab. Dies erlaubt eine Höhenverstellung des Lastaufnahmerahmens des jeweiligen Routenzugwagens relativ zum Fahrwerk, wie es häufig zum Be- und Entladen erwünscht ist.

In einer Weiterbildung der erfindungsgemäßen Moduleinheit beinhalten die Rahmenkopplungsmittel elektrische Verbindungsmittel zum elektrischen Kontaktieren einer oder mehrerer elektrischer Leitungen, die an den zu koppelnden Lastaufnahmerahmenteilen vorgesehen sind, gleichzeitig mit dem mechanischen Koppeln derselben. Dies erspart die Notwendigkeit, die elektrische Kontaktierung der entsprechenden Leitungen separat und zusätzlich zur mechanischen Verkopplung der betreffenden Lastaufnahmenrahmenteile bewirken zu müssen.

Vorteilhafte Ausführungsformen der Erfindung sind in den Zeichnungen dargestellt und werden nachfolgend beschrieben. Hierbei zeigen:
- Fig. 1: eine Draufsicht von unten auf eine Fahrwerkeinheit für einen Routenzug in Geradeausfahrt-Stellung,
- Fig. 2: eine Ansicht entsprechend Fig. 1 in einer Kurvenfahrtsituation,
- Fig. 3: eine Ansicht entsprechend Fig. 2 in einer gegensinnigen Kurvenfahrtsituation,
- Fig. 4: eine Seitenansicht der Fahrwerkeinheit von Fig. 1,
- Fig. 5: eine Ansicht entsprechend Fig. 1 für eine alternative Fahrwerkeinheit,
- Fig. 6: eine Ansicht entsprechend Fig. 2 für die alternative Fahrwerkeinheit
- Fig. 7: eine Perspektivansicht einer Routenzug-Moduleinheit mit dem Fahrwerk von Fig. 1 und in einer Ruhestellung hochgeklappten Lastaufnahmerahmenteilen,
- Fig. 8: eine Perspektivansicht entsprechend Fig. 7 mit in eine Funktionsstellung heruntergeschwenkten Lastaufnahmerahmenteilen,
- Fig. 9: eine Draufsicht auf die Moduleinheit von Fig. 8,
- Fig. 10: eine Draufsicht entsprechend Fig. 9 mit teleskopartig verlängerten Querträgern,
- Fig. 11: eine Ansicht entsprechend Fig. 10 mit teleskopartig verlängerten Längsträgern,
- Fig. 12: eine Detailseitenansicht eines Kopplungsbereichs von zu koppelnden Längsträgerteilen der Moduleinheit in einer noch entkoppelten Position,
- Fig. 13: eine seitenvertauschte Ansicht entsprechend Fig. 12 mit vollständig gekoppelten Längsträgerteilen,
- Fig. 14: eine Perspektivansicht von vorn oben auf zwei zur Bildung eines Routenzugs gekoppelte Moduleinheiten des Typs der Figuren 7 bis 13,
- Fig. 15: eine Seitenansicht dreier verkoppelter Moduleinheiten,
- Fig. 16: eine Draufsicht von unten auf eine vorteilhafte Realisierung eines im Routenzug vordersten Fahrwerkteils,
- Fig. 17: eine Seitenansicht einer vorteilhaften Realisierung eines im Routenzug verwendbaren letzten Fahrwerkteils,
- Fig. 18: eine Draufsicht von unten auf das Endwagen-Fahrwerkteil von Fig. 17,
- Fig. 19: eine Draufsicht von unten auf zwei gekoppelte Fahrwerkteile und zwei gekoppelte Lastaufnahmerahmenteile gemäß einer weiteren vorteilhaften Ausführungsform,
- Fig. 20: eine Draufsicht von unten auf die beiden Fahrwerkteile von Fig. 19 bei abgenommener Abdeckung zur Veranschaulichung der Kopplung,
- Fig. 21: eine Seitenansicht der beiden Fahrwerkteile von Fig. 20,
- Fig. 22: eine Ansicht entsprechend Fig. 20 für eine Kurvenfahrtsituation entsprechend Fig. 2,
- Fig. 23: eine Seitenansicht von hinten auf ein Fahrwerkteil mit darauf abgestütztem Lastaufnahmerahmenteil in einer weiteren erfindungsgemäßen Realisierung,
- Fig. 24: eine Draufsicht auf das Fahrwerkteil von Fig. 23 ohne den aufgesetzten Lastaufnahmerahmenteil,
- Fig. 25: eine Seitenansicht entsprechend Fig. 23 in einer Fahrsituation mit Bodenunebenheit,
- Fig. 26: eine Perspektivansicht eines Routenzuges zur Veranschaulichung unterschiedlicher Realisierungen von Lastaufnahmerahmenteilen,
- Fig. 27: eine Draufsicht von oben auf zwei Fahrwerkteile mit zwischenliegendem Lastaufnahmerahmen bei abgenommener Kopplungsabdeckung gemäß einer weiteren Routenzug-Ausführungsform,
- Fig. 28: eine Draufsicht von unten auf die Anordnung von Fig. 27,
- Fig. 29: eine Ansicht entsprechend Fig. 27 in einer Kurvenfahrtsituation,
- Fig. 30: eine Draufsicht von unten auf die Anordnung von Fig. 29,
- Fig. 31: eine Ansicht von oben in einer zu Fig. 29 entgegengesetzten Kurvenfahrtsituation und
- Fig. 32: eine Ansicht von unten für die Anordnung von Fig. 31.

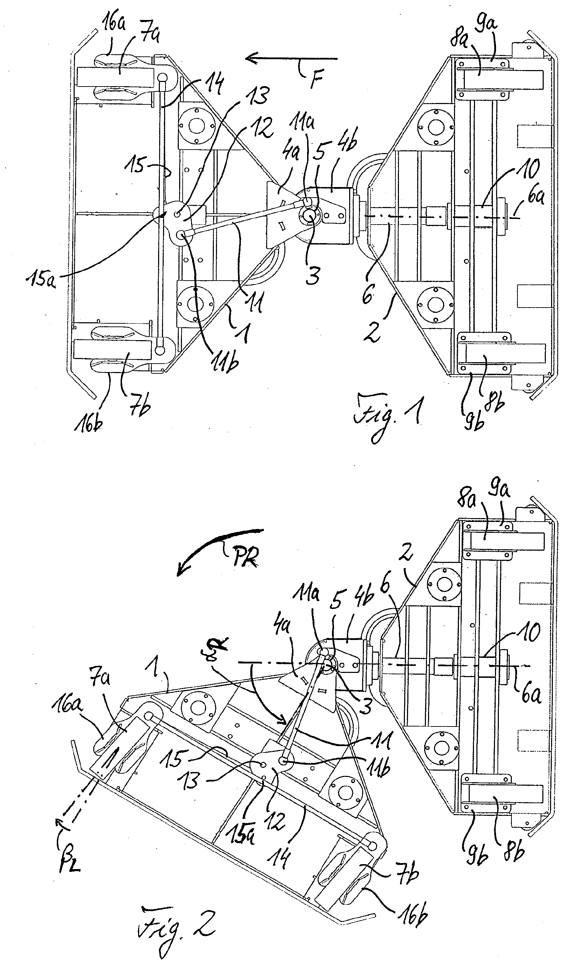

Die in den Figuren 1 bis 4 dargestellte Routenzug-Fahrwerkeinheit beinhaltet einen Vorderwagen-Fahrwerkteil 1 und einen Hinterwagen-Fahrwerkteil 2, die miteinander um eine Hochachse 3 drehbeweglich gekoppelt sind. Dazu weisen der Vorderwagen-Fahrwerkteil 1 an seinem hinteren Ende und der Hinterwagen-Fahrwerkteil 2 an seinem vorderen Ende je ein im vertikalen Schnitt U-förmiges Koppelmaul 4a, 4b mit vertikal fluchtenden Öffnungen auf, durch die ein Koppelbolzen 5 vertikal durchgesteckt ist, dessen Längsachse die Hochachse 3 definiert, um welche die beiden Fahrwerkteile 1, 2 zur Ermöglichung von Kurvenfahrten drehbeweglich sind.

Das Koppelmaul 4b des Hinterwagen-Fahrwerkteils 2 ist in einer horizontalen, längsverlaufenden Lagerbuchse 6 um deren Längsmittelachse 6a drehbeweglich gelagert. Dies bedeutet, dass der Hinterwagen-Fahrwerkteil 2 um die betreffende horizontale Längsachse 6a kippbeweglich mit dem Vorderwagen-Fahrwerkteil 1 gekoppelt ist.

Zur besseren Orientierung ist in Fig. 1 und den weiteren Figuren mit einem Pfeil F die Vorwärtsfahrrichtung für diese Fahrwerkeinheit angegeben, wenn sie Teil eines damit aufgebauten Routenzuges ist. In einem solchen Routenzug bildet der Vorderwagen-Fahrwerkteil 1 den hinteren Fahrwerkteil eines Vorderwagens, und der Hinterwagen-Fahrwerkteil 2 bildet den vorderen Fahrwerkteil eines Hinterwagens, wobei mit Vorderwagen und Hinterwagen zwei im Routenzug aufeinanderfolgende Wagen gemeint sind, von denen der in Vorwärtsfahrtrichtung F vordere Wagen der Vorderwagen und der daran angekoppelte, nachfolgende Wagen der Hinterwagen ist. Dementsprechend setzt sich das Fahrwerk eines jeweiligen Routenzugwagens gemäß der Erfindung aus zwei einander zugewandten Fahrwerkteilen zweier im Routenzug aufeinanderfolgend angeordneter Fahrwerkeinheiten zusammen, und zwar aus einem Hinterwagen-Fahrwerkteil einer vorderen Fahrwerkeinheit als vorderem Fahrwerkteil des Wagens und einem Vorderwagen-Fahrwerkteil einer nachfolgenden Fahrwerkeinheit als einem hinteren Fahrwerkteil des Wagens.

Jeder der beiden in der erfindungsgemäßen Fahrwerkeinheit bleibend miteinander gekoppelten Fahrwerkteile weist wenigstens ein Rad auf. Im gezeigten Ausführungsbeispiel sind dies zwei parallele Vorderwagen-Hinterräder 7a, 7b am Vorderwagen-Fahrwerkteil 1 und zwei parallele Hinterwagen-Vorderräder 8a, 8b am Hinterwagen-Fahrwerkteil 2, wobei mit der Charakterisierung "parallel" die Anordnung der beiden Räder 7a, 7b bzw. 8a, 8b auf gleicher Höhe in der horizontalen Richtung quer zur Längsrichtung gemeint ist, die durch die Vorwärtsfahrrichtung F bzw. durch die dazu parallelen Längsrichtungen der beiden Fahrwerkteile 1, 2 definiert ist. Wie der Name sagt, bilden in einem aufgebauten Routenzug die beiden Vorderwagen-Hinterräder 7a, 7b die Hinterräder eines Vorderwagens und die beiden Hinterwagen-Vorderräder 8a, 8b die Vorderräder eines an den Vorderwagen anschließenden Hinterwagens. Die Hinterwagen-Vorderräder 8a, 8b sind mittels je einer Radaufhängung 9a, 9b um eine zugehörige Hochachse frei drehbar. Zudem sind sie mit ihren Radaufhängungen 9a, 9b an einer Pendelachse 10 aufgehängt, mit der Folge, dass die beiden Räder 8a, 8b unabhängig voneinander um eine durch die Pendelachse definierte Längsachse kippbeweglich sind.

Erfindungsgemäß weist die Fahrwerkeinheit einen Lenkmechanismus auf, der zum Lenken des wenigstens einen Vorderwagen-Hinterrades, im gezeigten Ausführungsbeispiel der Fig. 1 bis 4 der beiden parallelen Vorderwagen-Hinterräder 7a, 7b, in Abhängigkeit von der Drehstellung der beiden gekoppelten Fahrwerkteile 1, 2 relativ zueinander eingerichtet ist, wie sie sich durch kurvenfahrtbedingtes Drehen des Vorderwagen-Fahrwerkteils gegenüber dem Hinterwagen-Fahrwerkteil 2 bezüglich der zugehörigen Hochachse ergibt. Im gezeigten Ausführungsbeispiel besteht dieser Lenkmechanismus aus einem Lenkgestänge, das einerseits mit den beiden Vorderwagen-Hinterrädern 7a, 7b und andererseits mit dem Hinterwagen-Fahrwerkteil 2 verbunden ist.

Dazu weist das Lenkgestänge eine Längsstange 11 auf, die mit einem Ende 11a neben dem und außermittig zum Kopplungsbolzen 5 an einem Anlenkpunkt des Koppelmauls 4b des Hinterwagen-Fahrwerkteils 2 und mit seinem anderen Ende 11 b an einer Exzenterscheibe 12 angelenkt ist, die um eine zugehörige Hochachse 13 drehbeweglich am Vorderwagen-Fahrwerkteil 1 gehalten ist. Des Weiteren beinhaltet das Lenkgestänge eine Querstange 14, die die jeweiligen Radaufhängungen 16a, 16b der Vorderwagen-Hinterräder 7a, 7b des Vorderwagen-Fahrwerkteils 1 zwangskoppelt. Eine weitere Querstange 15 koppelt die Radaufhängung 16a eines der beiden Vorderwagen-Hinterräder 7a, 7b an einen weiteren Koppelpunkt 15a der Exzenterscheibe 12. Mit diesem Aufbau ist das Lenkgestänge so ausgelegt, dass es für die Vorderwagen-Hinterräder 7a, 7b einen zum Kurvendrehwinkel des Hinterwagen-Fahrwerkteils 2 relativ zum Vorderwagen-Fahrwerkteil 1 bezüglich der betreffenden Hochachse 3 gegensinnigen Lenkwinkel einstellt, wobei durch entsprechende Auslegung des Lenkmechanismus auch eine gewünschte Übersetzung zwischen dem relativen Drehwinkel der beiden Fahrwerkteile 1, 2 und dem Lenkwinkel für die gelenkten Vorderwagen-Hinterräder 7a, 7b eingestellt wird.

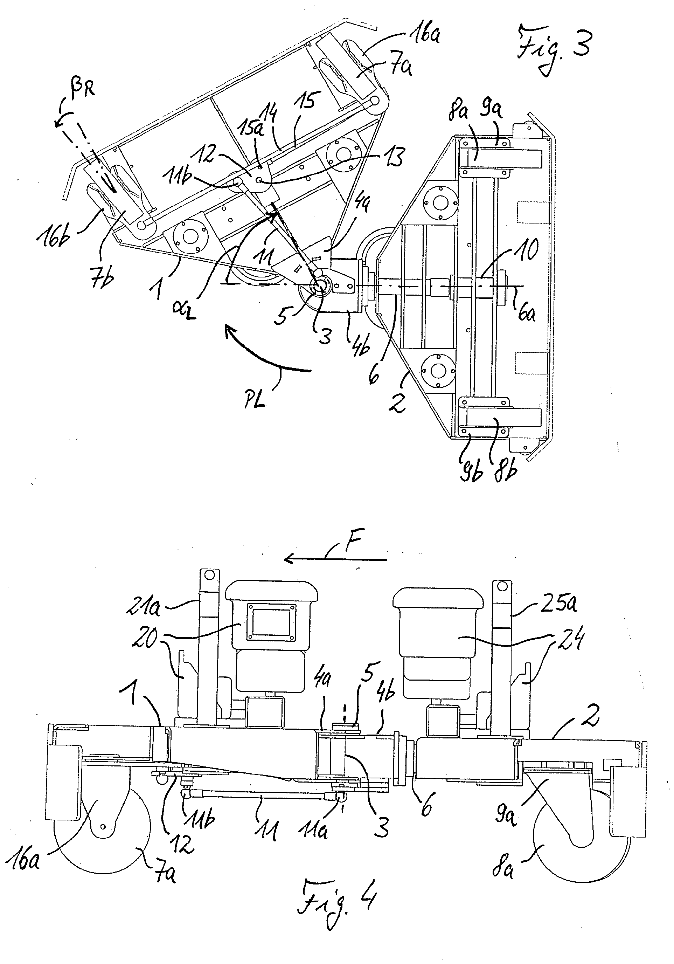

Die Fig. 2 und 3 illustrieren dieses Lenkverhalten in zwei gegensinnigen Kurvenfahrtsituationen in Unterseitenansichten. In Fig. 2 beschreibt der Routenzug, von dem die gezeigte Fahrwerkeinheit einen Bestandteil bildet, eine Rechtskurve, wie durch einen Rechtskurvenpfeil PR symbolisiert, während Fig. 3 den Fall einer Linkskurve veranschaulicht, symbolisiert durch einen Linkskurvenpfeil PL. Im Rechtskurvenfall von Fig. 2 dreht sich der Vorderwagen-Fahrwerkteil 1 gegenüber dem Hinterwagen-Fahrwerkteil 2 um einen entsprechenden Rechtskurvenwinkel α_{R} nach rechts. Dies wird vom Lenkgestänge in eine gegensinnige Lenkdrehung der Vorderwagen-Hinterräder 7a, 7b um einen zugehörigen Lenkwinkel β_{L} nach links übersetzt, dessen Betrag in einer von der Auslegung des Lenkgestänges abhängigen Weise vom Betrag des Kurvenfahrtwinkels α_{R} abhängt. Analog stellt das Lenkgestänge beim in Fig. 3 gezeigten Fall einer Kurvenfahrt nach links einen zum Kurvenfahrtwinkel α_{L} gegensinnigen, nach rechts gerichteten Lenkwinkel β_{R} für die gelenkten Vorderwagen-Hinterräder ein.

Der genaue Zusammenhang des jeweils einzustellenden Lenkwinkels für die Vorderwagen-Hinterräder in Abhängigkeit von der relativen Drehstellung zwischen Vorderwagen- und Hinterwagen-Fahrwerkteil 1, 2 kann je nach Wunsch durch entsprechende Auslegung des Lenkgestänges in Abstimmung mit den übrigen relevanten Dimensionierungsgrößen festgelegt werden, wie z.B. dem Radabstand zwischen Vorderräder und Hinterräder eines jeweiligen Routenzugwagens und dem Abstand der gelenkten Vorderwagen-Hinterräder 7a, 7b vom Drehpunkt, d.h. der Hochachse 3, zwischen Vorderwagen- und Hinterwagen-Fahrwerkteil 1, 2. Es versteht sich, dass bei Bedarf der Lenkmechanismus auch so ausgelegt sein kann, dass er statt des erwähnten gegensinnigen Lenkwinkels einen zum Kurvendrehwinkel gleichsinnigen Lenkwinkel einstellt.

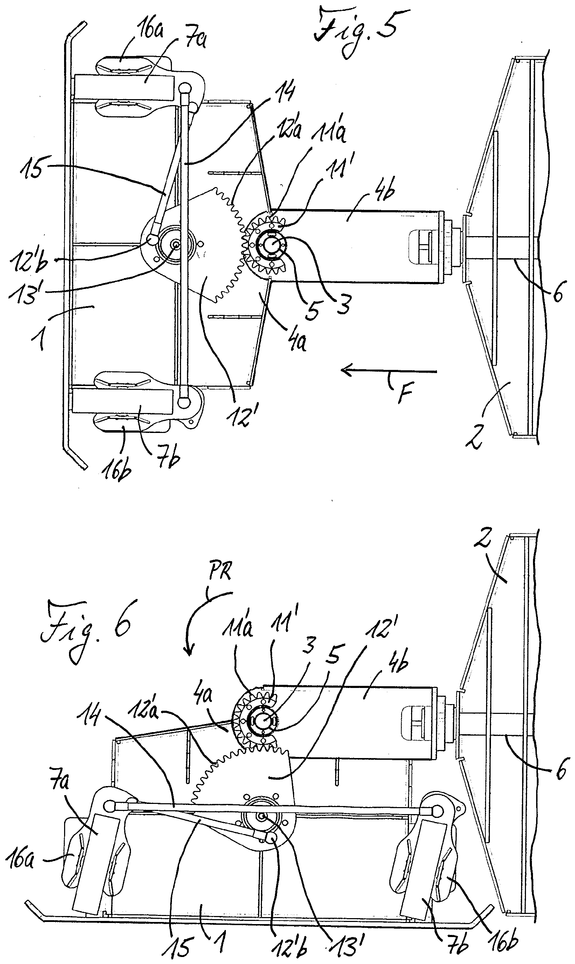

In den Fig. 5 und 6 ist eine alternative Fahrwerkeinheit gezeigt, die sich gegenüber derjenigen der Fig. 1 bis 4 in der konkreten Gestaltung des Lenkmechanismus unterscheidet. Im Übrigen entspricht die Fahrwerkeinheit der Fig. 5 und 6 derjenigen der Fig. 1 bis 4 hinsichtlich Aufbau und Funktion, wobei zum leichteren Verständnis für funktionell äquivalente, nicht zwingend identische Elemente gleiche Bezugszeichen verwendet sind und insoweit auf die obige Beschreibung zu den Fig. 1 bis 4 verwiesen werden kann.

Der Lenkmechanismus beinhaltet beim Ausführungsbeispiel der Fig. 5 und 6 ein drehfest am Koppelmaul 4b des hier nur teilweise gezeigten Hinterwagen-Fahrwerkteils 2 angebrachtes Zahnrad 11' mit einer sich über etwas mehr als 180° erstreckenden Zahnreihe 11'a, wobei im Übrigen der Hinterwagen-Fahrwerkteil 2 demjenigen der Fig. 1 bis 4 entspricht und daher in den Fig. 5 und 6 nicht weiter gezeigt ist. Mit diesem Zahnrad 11' kämmt eine sektorförmige Zahnscheibe 12', die hierzu an ihrem bogenförmigen Außenumfang eine zugehörige Zahnreihe 12'a aufweist. Die Zahnscheibe 12' ist um eine Hochachse 13' drehbeweglich am Vorderwagen-Fahrzeugteil 1 gehalten.

Des Weiteren weist der Lenkmechanismus im Beispiel der Fig. 5 und 6 die Querstange 14, welche die Radaufhängungen 16a, 16b der Vorderwagen-Hinterräder 7a, 7b zwangskoppelt, und die Querstange 15 auf, wie sie auch beim Lenkmechanismus des Beispiels der Fig. 1 bis 4 vorgesehen sind. Dabei ist im Beispiel der Fig. 5 und 6 die Querstange 15 an ihrem einen Ende an die Radaufhängung 16a gekoppelt, wie im Beispiel der Fig. 1 bis 4, während sie mit ihrem anderen Ende an einen Koppelpunkt 12'b der Zahnscheibe 12' angelenkt ist. Der Koppelpunkt 12'b befindet sich in einem der Zahnreihe 12'a bezüglich der Hochachse 13' gegenüberliegenden Endbereich der sektorförmigen Zahnscheibe 12'.

Fig. 5 zeigt analog zu Fig. 1 die Fahrwerkeinheit in Geradeausfahrt-Stellung. Fig. 6 zeigt die Fahrwerkeinheit in einer Rechtskurvenfahrt-Situation analog zu Fig. 2, und zwar speziell in einer Stellung mit einem maximalen Relativdrehwinkel von ca. 90° zwischen Hinterwagen-Fahrwerkteil 2 und Vorderwagen-Fahrwerkteil 1 und entsprechend maximalem Lenkeinschlag für die Vorderwagen-Hinterräder 7a, 7b. Der Lenkeinschlag für die Vorderwagen-Hinterräder 7a, 7b wird dadurch bewirkt, dass sich durch das Verdrehen von Hinterwagen-Fahrwerkteil 2 und Vorderwagen-Fahrwerkteil 1 um die Hochachse 3 die Zahnscheibe 12' mit ihrer Zahnreihe 12'a am drehfest mit dem Hinterwagen-Koppelmaul 4b angeordneten Zahnrad 11' abrollt. Die sektorförmige Zahnscheibe 12' erfährt dabei eine gewisse Drehbewegung relativ zum übrigen Vorderwagen-Fahrwerkteil 1 um die Hochachse 13', was eine entsprechende Zug- bzw. Schubbewegung der Querstange 15 zur Folge hat.

Mit anderen Worten übernehmen beim Ausführungsbeispiel der Fig. 5 und 6 das Zahnrad 11' und die damit kämmende Zahnscheibe 12' die Funktion der Längsstange 11 und der Exzenterscheibe 12 des Ausführungsbeispiels der Fig. 1 bis 4. Beim Lenkmechanismus der Fig. 1 bis 4 ist bei der Systemauslegung darauf zu achten, dass keine blockierende Überstreckung bzw. Überdrehung der exzentrisch gelagerten Längsstange 11 bei maximalem Lenkeinschlag auftritt. Diese Auslegungsbetrachtung kann beim Ausführungsbeispiel der Fig. 5 und 6 entfallen. Hier muss lediglich darauf geachtet werden, dass die Zahnscheibe 12' eine für den maximalen Lenkausschlag benötigte Bogenlänge ihrer Zahnreihe 12'a aufweist. Im Übrigen weist die alternative Fahrwerkeinheit der Fig. 5 und 6 die gleichen vorteilhaften Funktionen und Eigenschaften sowie Verwendungsmöglichkeiten auf wie die Fahrwerkeinheit der Fig. 1 bis 4.

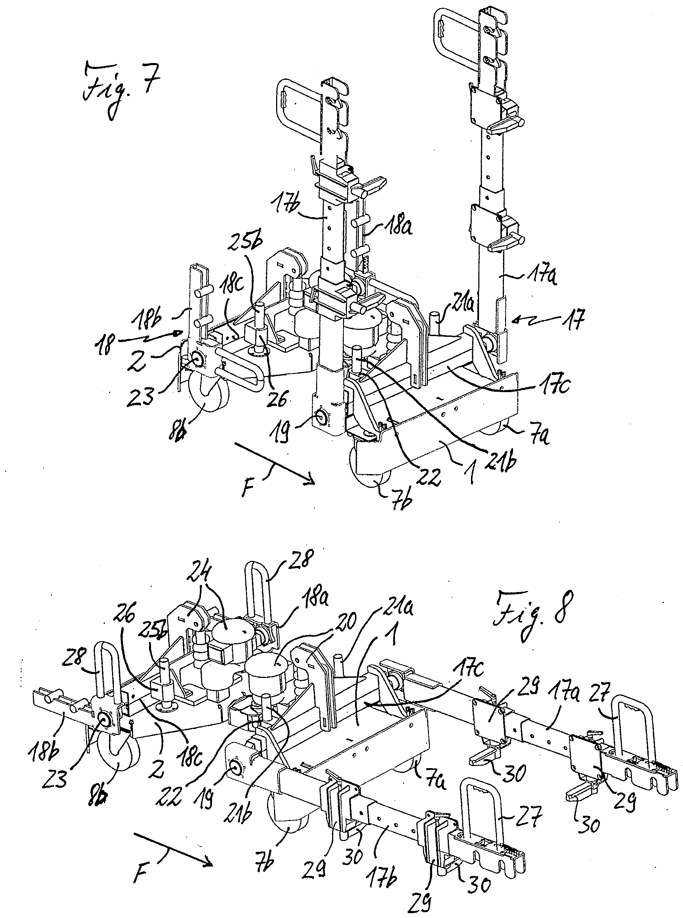

Die Fig. 7 und 8 zeigen eine erfindungsgemäße Moduleinheit auf Basis der in den Fig. 1 bis 4 veranschaulichten Fahrwerkeinheit mit dem Vorderwagen-Fahrwerkteil 1 und dem Hinterwagen-Fahrwerkteil 2, wobei es sich alternativ auch um die Fahrwerkeinheit der Fig. 5 und 6 handeln kann. Durch lösbares Koppeln mehrerer solcher Moduleinheiten hintereinander lässt sich ein entsprechender Routenzug aufbauen. Wie aus den Fig. 7 und 8 ersichtlich, beinhaltet die Moduleinheit zusätzlich zu der Fahrwerkeinheit 1, 2 einen sich auf dem Vorderwagen-Fahrwerkteil 1 abstützenden hinteren Vorderwagen-Lastaufnahme-rahmenteil 17 und einen sich auf dem Hinterwagen-Fahrwerkteil 2 abstützenden vorderen Hinterwagen-Lastaufnahmerahmenteil 18. Wie durch die verwendeten Begriffe angezeigt, bildet der hintere Vorderwagen-Lastaufnahmerahmenteil 17 in einem durch Hintereinanderkoppeln mehrerer dieser Moduleinheiten gebildeten Routenzug einen hinteren Lastaufnahmerahmenteil eines Vorderwagens, während der vordere Hinterwagen-Lastaufnahmerahmenteil 18 einen vorderen Lastaufnahmerahmenteil eines auf den Vorderwagen im Routenzug folgenden Hinterwagens bildet.

Wie weiter aus den Fig. 7 und 8 ersichtlich, beinhaltet der hintere Vorderwagen-Lastaufnahmerahmenteil 17 zwei seitliche Rahmenlängsträger 17a, 17b, die um eine zugehörige Querachse 19 zwischen einer in Fig. 7 gezeigten, im Wesentlichen vertikalen Ruhestellung und einer in Fig. 8 gezeigten, im Wesentlichen horizontalen Funktionsstellung schwenkbeweglich angeordnet sind. Dazu sind die Rahmenlängsträger 17a, 17b an einem die Querachse 19 definierenden Rahmenquerträger 17c schwenkbeweglich angelenkt. Der Querträger 17c stützt sich über einen hydraulisch, alternativ z.B. auch pneumatisch oder elektromagnetisch, betätigten Hubmechanismus 20 höhenbeweglich auf dem Vorderwagen-Fahrwerkteil 1 ab, und zwar in Längsrichtung auf Höhe hinter der durch die Verbindungslinie der beiden zugehörigen Vorderwagen-Hinterräder 7a, 7b definierten Vorderwagen-Hinterachse. Zur Vertikalführung weist der Vorderwagen-Fahrwerkteil 1 zwei vertikale, mit Querabstand voneinander angeordnete Führungsbolzen 21 a, 21 b auf, in die entsprechende, am Rahmenquerträger 17c vorgesehene Führungshülsen 22 eingesteckt sind. Einer der vertikalen Führungsbolzen 21 a ist zusammen mit auf dem Vorderwagen-Fahrwerkteil 1 montierten Teilen des Hubmechanismus 20 auch in der Seitenansicht der Fahrwerkeinheit in Fig. 4 zu erkennen.

In analoger Weise beinhaltet der vordere Hinterwagen-Lastaufnahmerahmenteil 18 zwei seitliche, um eine Querachse 23 zwischen einer im Wesentlichen vertikalen Ruhestellung gemäß Fig. 7 und einer im Wesentlichen horizontalen Funktionsstellung gemäß Fig. 8 schwenkbewegliche Rahmenlängsträger 18a, 18b, die an einem die Querachse 23 definierenden Rahmenquerträger 18c schwenkbeweglich angelenkt sind. Der Querträger 18c stützt sich über einen Hubmechanismus 24 auf dem Hinterwagen-Fahrwerkteil 2 ab, und zwar in Längsrichtung auf Höhe vor der durch die Verbindungslinie der beiden Hinterwagen-Vorderräder 8a, 8b gegebenen Hinterwagen-Vorderachse. Zur Vertikalführung des durch den Hubmechanismus 24 höhenbeweglichen vorderen Hinterwagen-Lastaufnahmerahmenteils 18 sind am Hinterwagen-Fahrwerkteil 2 wiederum zwei in Querrichtung beabstandete Vertikalbolzen 25a, 25b, siehe auch wiederum Fig. 4, angebracht, in die jeweils eine am Rahmenquerträger 18c angeordnete Vertikalführungshülse 26 eingesteckt ist.

An den Rahmenlängsträgern 17a, 17b, 18a, 18b beider Lastaufnahmerahmenteile 17, 18 sind jeweils Griffbügel 27, 28 vorgesehen, mit deren Hilfe die Rahmenlängsträger 17a, 17b, 18a, 18b von Hand zwischen ihren beiden Endstellungen gemäß den Fig. 7 und 8 verschwenkt werden können.

Im gezeigten Ausführungsbeispiel sind die Rahmenlängsträger 17a, 17b teleskopartig längenverstellbar ausgeführt. An diesen Rahmenlängsträgern 17a, 17b können lösbar und längsverschieblich Lastaufnahmearme 29 angebracht werden, die jeweils einen Tragarm 30 aufweisen, der sich mit einer relativ kurzen Länge, welche jedoch zum Halten und Tragen einer zwischen die Längsträger 17a, 17b eingebrachten Last ausreicht, quer nach innen erstreckt. Im Beispiel der Fig. 7 und 8 sind dies vier sich jeweils paarig gegenüberliegende Lastaufnahmearme 29. Positionierung und Anzahl der Lastaufnahmearme 29 können jedoch abgestimmt auf den jeweiligen Anwendungsfall flexibel variiert werden. Bei Bedarf können die Tragarme 30 schwenkbeweglich am Grundkörper der Lastaufnahmearme 29 angebracht sein, z.B. horizontal um ca. 90° und vorzugsweise so, dass die Tragarme 30 zweier am gleichen Längsträger 17a, 17b benachbarter Lastaufnahmearme 29 von ihrer gezeigten Tragstellung in Richtung des jeweils anderen Tragarms 30 nach innen in eine Freigabeposition parallel zum Längsträger 17a, 17b weggeklappt werden können, ohne z.B. mit Füßen einer transportierten Lastpalette zu kollidieren. Mit den weggeklappten Tragarmen 30 kann dann der jeweilige Längsträger 17a, 17b problemlos in seine Ruhestellung hochgeschwenkt werden, auch wenn sich noch eine Last innerhalb des Lastaufnahmerahmens befindet. Die Schwenkbewegung der Tragarme 30 kann z.B. mittels eines separaten Betätigungselementes oder gekoppelt mit der Schwenkbewegung der Längsträgergriffe 27 bewirkt werden.

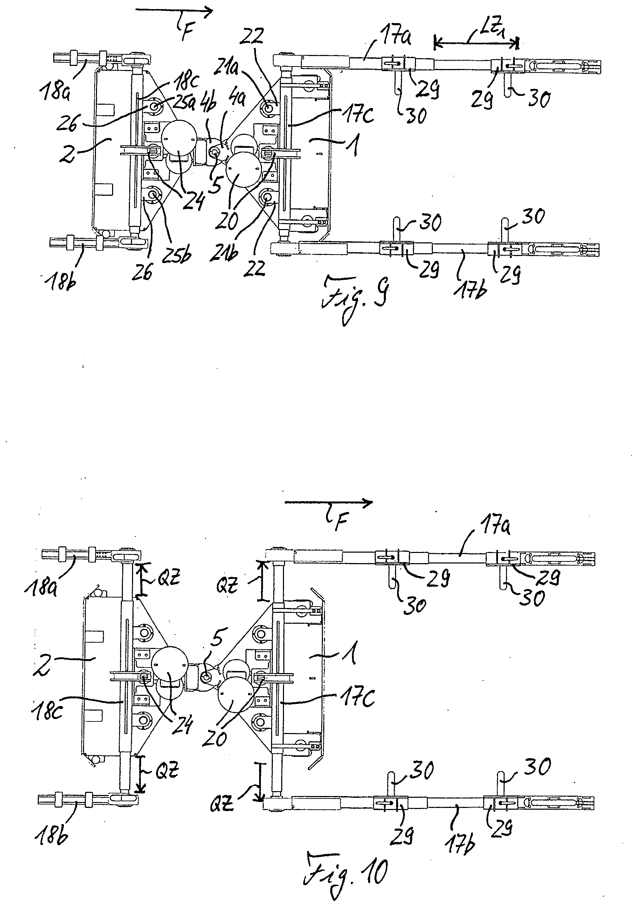

Die Flexibilität der Lastaufnahme wird weiter dadurch gefördert, dass auch die Rahmenquerträger 17c, 18c teleskopartig längenverstellbar ausgeführt sind. Eine solche teleskopartige Ausführung von Rahmenträgern ist dem Fachmann an sich bekannt und bedarf hier bezüglich der Realisierung für die Längsträger 17a, 17b und die Querträger 17c, 18c keiner näheren Erläuterungen. Die Fig. 9 bis 11 veranschaulichen in der Draufsicht die mit diesen Trägerverstellfunktionalitäten erzielbare Flexibilität hinsichtlich der Größe von zu transportierenden Lasten.

Fig. 9 veranschaulicht speziell die Rahmeneinstellung von Fig. 8 in der Draufsicht. Die beiden Rahmenlängsträger 17a, 17b sind im Vergleich zu einer kürzesten Länge um ein gewisses Verlängerungsmaß LZ₁ verlängert und mit den vier erwähnten Lastaufnahmearmen 29 paarweise bestückt. Die Rahmenquerträger 17c, 18c sind maximal eingezogen.

Fig. 10 zeigt den Fall, in welchem die beiden Rahmenquerträger 17c, 18c gegenüber ihrer kürzesten Länge von Fig. 9 maximal um ein Verlängerungsmaß QZ beidseitig ausgezogen sind. Dadurch steht im Vergleich zum Fall von Fig. 9 eine um 2×QZ größere Lastaufnahmebreite zur Verfügung.

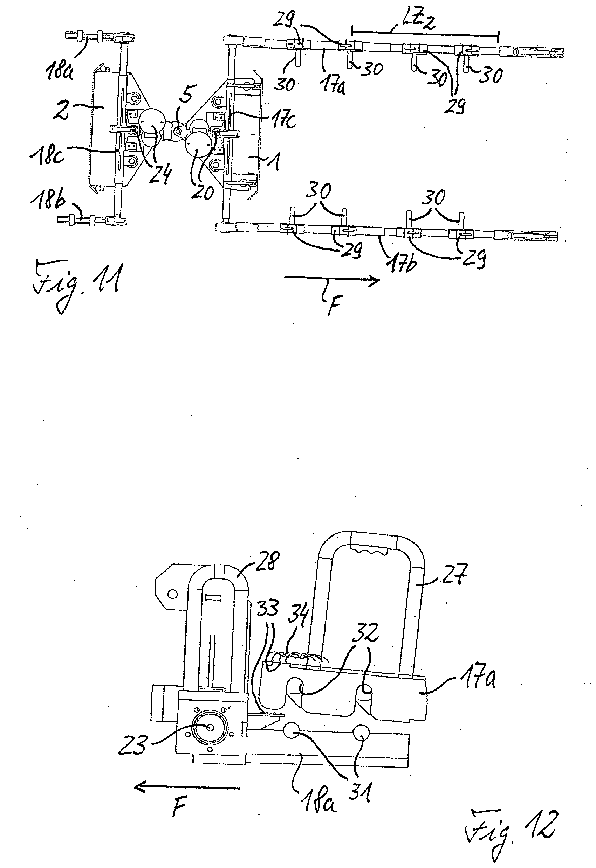

Fig. 11 veranschaulicht den Fall, in welchem ausgehend von Fig. 10 die beiden Rahmenlängsträger 17a, 17b maximal um ein Verlängerungsmaß LZ₂ ausgezogen sind, wobei Fig. 11 die Situation in einem kleineren Maßstab wiedergibt als die Fig. 9 und 10. An den vollständig ausgezogenen Rahmenlängsträgern 17a, 17b sind gemäß Fig. 11 acht Lastaufnahmearme jeweils wieder paarig gegenüberliegend angeordnet.

Es versteht sich, dass je nach Bedarf andere als die in den Fig. 9 bis 11 gezeigte Längen der teleskopartig verstellbaren Längsträger 17a, 17b und der Querträger 17c, 18c wählbar sind.

Mit Moduleinheiten der in den Fig. 7 bis 11 gezeigten Art lässt sich, wie gesagt, in einer sehr vorteilhaften Weise ein Routenzug beliebiger gewünschter Länge aufbauen. Darauf wird nachstehend in Verbindung mit den Fig. 12 bis 15 näher eingegangen.

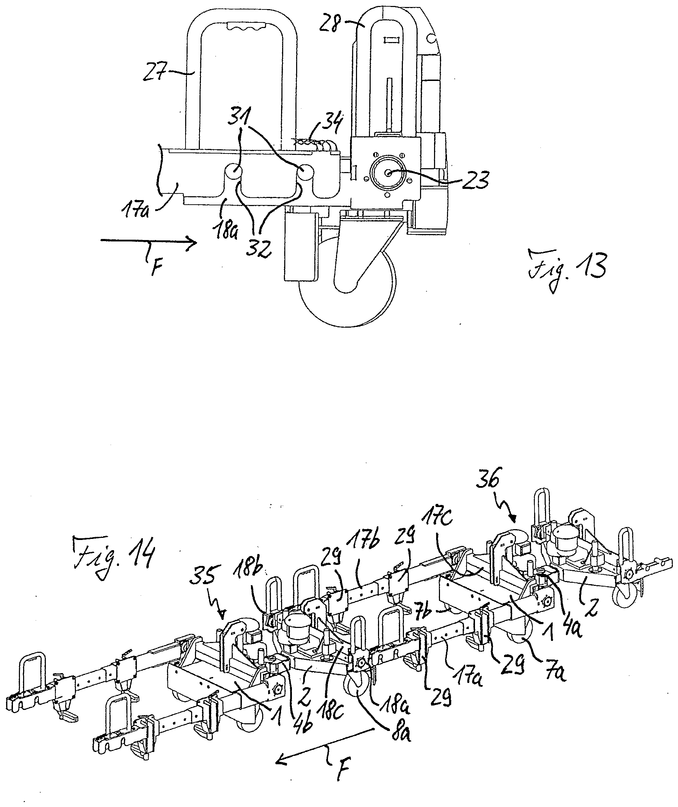

In den Fig. 12 und 13 ist zunächst die Kopplung je eines vorderen Längsträgers, beispielhaft des Längsträgers 18a einer ersten Moduleinheit, mit einem hinteren Längsträger, beispielhaft dem Längsträger 17a einer im Routenzug nachfolgenden Moduleinheit, im dafür interessierenden Kopplungsbereich veranschaulicht. Zunächst wird dazu von zwei hintereinander positionierten Moduleinheiten nach Art von Fig. 7 der Längsträger 18a von seiner vertikalen Ruhestellung gemäß Fig. 7 in seine horizontale Funktionsstellung gemäß Fig. 12 verschwenkt, siehe auch Fig. 8. Dann wird der Längsträger 17a der hinteren Moduleinheit von seiner vertikalen Ruhestellung von Fig. 7 in seine horizontale Funktionsstellung verschwenkt. Dabei greifen am Längsträger 18 vorgesehene Lagesicherungsbolzen 31 in am Längsträger 17a vorgesehene Vertikalschlitze 32 ein, so dass die beiden verkoppelten Längsträger 17a, 18a in Längsrichtung starr aneinander gehalten sind. Fig. 12 zeigt die beiden Träger 17a, 18a kurz vor dieser bewirkten Verkopplung, Fig. 13 zeigt sie in ihrer verkoppelten Endlage bzw. Funktionsstellung.

Weiter ist aus den Fig. 12 und 13 ersichtlich, dass entsprechende Rahmenkopplungsmittel außer diesen mechanischen Kopplungselementen 31, 32 zudem elektrische Verbindungsmittel 33 beinhalten, mit denen am Längsträger 17a zugeführte elektrische Leitungen 34 elektrisch mit nicht näher gezeigten elektrischen Leitungen kontaktiert werden, die am Längsträger 18a zugeführt werden. Die elektrischen Verbindungsmittel 33 sind so ausgelegt, dass die besagte Leitungskontaktierung gleichzeitig durch die mechanische Schwenkkopplungsbewegung des Längsträgers 17a bewirkt wird. Mit anderen Worten werden entsprechende elektrische Kontakte am Längsträger 17a und am Längsträger 18a gegeneinander zur Anlage gebracht, wenn der Längsträger 17a in seine mit dem Längsträger 18a mechanisch verkoppelte, horizontale Funktionsstellung verschwenkt wird. Dies erspart separate elektrische Kontaktierungsmaßnahmen für vorhandene elektrische Leitungen, wie Stromversorgungsleitungen und/oder Datenbusleitungen und/oder Steuersignalleitungen etc.

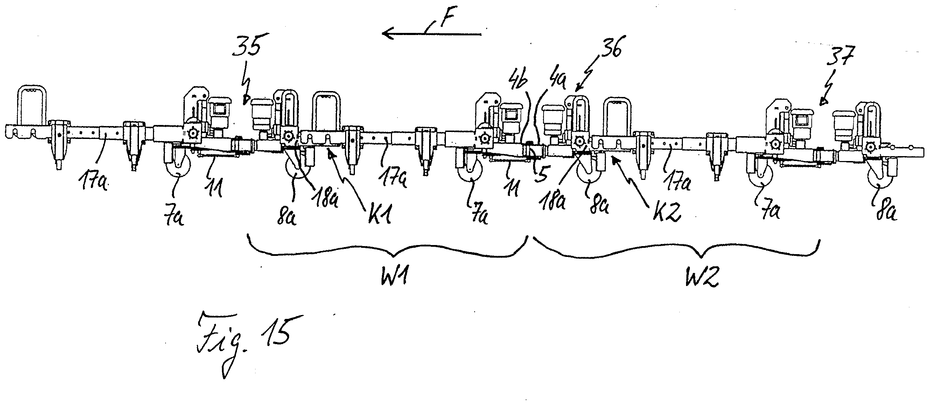

Die Fig. 14 und 15 veranschaulichen zwei bzw. drei Moduleinheiten nach Art von Fig. 7 bzw. 8, die in der eben erwähnten Weise hintereinander gekoppelt sind. Wie gezeigt, sind die beiden hinteren Längsträger, d.h. die vorderen Hinterwagen-Rahmenlängsträger 18a, 18b einer vorderen Moduleinheit 35 mit den beiden vorderen Längsträgern, d.h. den hinteren Vorderwagen-Rahmenlängsträgern 17a, 17b, einer nachfolgenden Moduleinheit 36 verkoppelt, so dass die beiden verkoppelten Längsträgerpaare 17a, 18a, 17b, 18b zusammen mit den zugehörigen Rahmenquerträgern 17c, 18c einen stabilen, steifen, viereckigen Lastaufnahmerahmen bilden, mit dessen Lastaufnahmearme 29 eine Last, wie ein Container oder dergleichen, getragen und transportiert werden kann. Der viereckige, starre Lastaufnahmerahmen bildet zusammen mit dem Hinterwagen-Fahrwerkteil 2 der vorderen Moduleinheit 35 als einem vorderen Fahrwerkteil und dem Vorderwagen-Fahrwerkteil 1 der nachfolgenden Moduleinheit 36 als einem hinteren Fahrwerkteil einen Routenzugwagen W1, der vorne mit dem Koppelmaul 4b der vorderen Moduleinheit 35 und hinten mit dem Koppelmaul 4a der hinteren Moduleinheit 36 abschließt. Ein Routenzug kann durch entsprechende Hintereinanderkopplung von Moduleinheiten mit einer gewünschten Anzahl solcher Routenzugwagen aufgebaut werden, in Fig. 15 durch einen weiteren Wagen W2 gezeigt, der durch Ankoppeln einer weiteren Moduleinheit 37 gebildet ist. Vorne kann der Routenzug in an sich bekannter und daher hier nicht näher zu erläuternder Weise mit einem anzukoppelnden Zugfahrzeug abschließen. Wenn die in den Fig. 14 und 15 vordere Moduleinheit 35 z.B. eine vorderste Moduleinheit des Routenzuges ist, kann das Zugfahrzeug an deren in die horizontale Funktionsstellung, wie gezeigt, verschwenkte Längsträger 17a, 17b angekoppelt werden, oder die Längsträger 17a, 17b werden in ihre Ruhestellung hochgeschwenkt und das Zugfahrzeug wird in anderer Weise an die vorderste Moduleinheit 35 angekoppelt.

Wie die vorstehende Beschreibung deutlich macht und in Fig. 15 nochmals illustriert, erfolgt der erfindungsgemäße Aufbau eines Routenzuges nicht durch lösbares Koppeln aufeinanderfolgender Wagen mittels einer Deichsel bzw. im Bereich der vorliegenden Koppelmaulelemente 4a, 4b, sondern durch lösbares Koppeln entsprechender Teile des Lastaufnahmerahmens eines Wagens an zugehörigen Rahmenkopplungsstellen K1, K2. In den gezeigten Beispielen sind die vorderen Längsträgerteile 18a, 18b eines jeweiligen Wagens deutlich kürzer als die hinteren Längsrahmenteile 17a, 17b, alternativ sind jedoch beliebige andere Aufteilungen bzw. Auftrennungen des viereckigen Lastaufnahmerahmens eines jeweiligen Routenzugwagens möglich. Im Extremfall ist es auch möglich, dass die Längsträger eines Wagens in ganzer Länge an einer Moduleinheit vorgesehen sind und direkt mit einem Querrahmenteil einer vorne oder hinten anschließenden Moduleinheit lösbar gekoppelt werden. Das Verschwenken der betreffenden Längsträger in ihre vertikale Ruhestellung führt zum einen zur Entkopplung des Routenzuges in die einzelnen Moduleinheiten und kann gegebenenfalls auch das Be- oder Entladen erleichtern, indem beispielsweise auf einer Wagenseite nach Absenken einer transportierten Last die Längsträgerteile entkoppelt und hochgeschwenkt werden, um die Zugänglichkeit zur Entladung zu verbessern.

Ein wie zu den Fig. 14 und 15 geschildert aufgebauter Routenzug aus erfindungsgemäßen Routenzug-Moduleinheiten mit den erfindungsgemäßen Fahrwerkeinheiten lässt sich ersichtlich konstruktiv mit relativ geringem Aufwand realisieren und weist hervorragende Fahreigenschaften auf, insbesondere hinsichtlich Spurtreue und Unempfindlichkeit bzw. Ausgleich von Bodenunebenheiten. Zwei aufeinanderfolgende Routenzugwagen sind über die Koppelmaulelemente 4a, 4b sowohl um die Hochachse als auch um die horizontale Längsachse frei gegeneinander verdrehbar bzw. verkippbar. Die ungelenkten Vorderräder jedes Routenzugwagens sind an einer Pendelachse aufgehängt, so dass die beiden Vorderräder auch auf unebenem Gelände die Bodenhaftung behalten und sich der Wagen zudem um eine horizontale Querachse gegenüber dem Vorderwagen neigen kann. Eine Kompensation von Bodenwellen und ähnlichen Bodenunebenheiten in Fahrtrichtung ohne Traktionsverlust wird zudem dadurch erreicht, dass die Längsträger 17a, 17b, 18a, 18b schwenkbeweglich an den Querträgern 17c, 18c angelenkt sind, d.h. die betreffenden Rahmenquerachsen 19, 23 bilden Kippachsen, um welche die gekoppelten Längsträger 17a, 17b, 18a, 18b gegenüber den Querträgern 17c, 18c bzw. den sie stützenden Fahrwerkteilen 1, 2 kippbeweglich sind. Die Hinterräder des jeweiligen Routenzugwagens werden durch die Lageverdrehung des Wagens relativ zum nachfolgenden Routenzugwagen und insbesondere zu dessen vorderem Fahrwerkteil gelenkt, speziell so, dass eine optimale Spurtreue erreicht wird. Dazu werden die Wagenhinterräder vorzugsweise gegensinnig zum gefahrenen Lenkradius des Routenzuges ausgelenkt. Dies wird durch den Lenkmechanismus bewirkt, der in die jeweilige Fahrwerkeinheit integriert ist. Es entfällt daher jegliche Lenkverbindung zwischen dem vorderen und hinteren Fahrwerkteil eines jeweiligen Routenzugwagens. Je nach Systemausführung ist der Lenkmechanismus so ausgelegt, dass der gegensinnige Lenkwinkeleinschlag der Wagenhinterräder dafür ausreicht, dass der Routenzugwagen eine neutrale Spur hält, d.h. der Spur des vorausfahrenden Wagens folgt. Typische gegensinnige Lenkwinkeleinschläge können z.B. im Bereich zwischen ca. 4° und 8° bei einem Routenzug-Kurvenwinkel von nahe 90° betragen.

Der Wagenverbund im Routenzug ist durch die jeweils vier Wagenräder, wobei die Hinterräder als Schwenkräder an der Pendelachse aufgehängt sind, in sich durch eine Dreipunktlagerung stabil gelagert. Die Routenzugwagen können praktisch jeder Geländeform folgen, ohne weitere Stützrollen zu benötigen und ohne die Traktion zu verlieren oder unkontrollierbar seitlich wegzudriften. Dies gilt insbesondere auch für schräges Gelände.

Die Routenzugwagen des Routenzugs lassen sich beidseitig be- und entladen, und der Lastaufnahmerahmen lässt sich in sehr niedriger Bauweise realisieren, wie z.B. aus Fig. 15 unmittelbar ersichtlich. Er bildet einen direkten Zug- und Schubverbund. Die Krafteinleitung des viereckigen Lastaufnahmerahmens in das Fahrwerk ist so gewählt, dass bei jedem Beladungszustand eine ausreichende Traktion der Fahrwerksräder gegeben ist und kein Kippmoment entsteht, das aus Anfahr- oder Bremsmomenten resultiert. Der Lastaufnahmerahmen kann, wie geschildert, in seiner Länge und seiner Breite verstellt werden. Typische Längen sind beispielsweise zwischen 1,25m und 1,7m oder mehr, typische Breiten sind ca. 0,85m bis 1,25m und mehr. Durch die entsprechende Anordnung der Hubeinrichtung wird sichergestellt, dass auch die Hubkräfte zwischen den Radachsen der jeweiligen Fahrwerkeinheit in das Fahrwerk eingeleitet werden. Die erwähnten elektrischen Verbindungsmittel können bei Bedarf dazu genutzt werden, einem zentralen Zugleitsystem die Information zu vermitteln, wie viele Routenzugwagen an einem Zugfahrzeug momentan angekoppelt sind. Entsprechende elektrische bzw. elektromagnetische Signalinformationen können zudem bei Bedarf dafür genutzt werden, die einzelnen Routenzugwagen in ihrer Reihenfolge im Routenzug zu identifizieren.

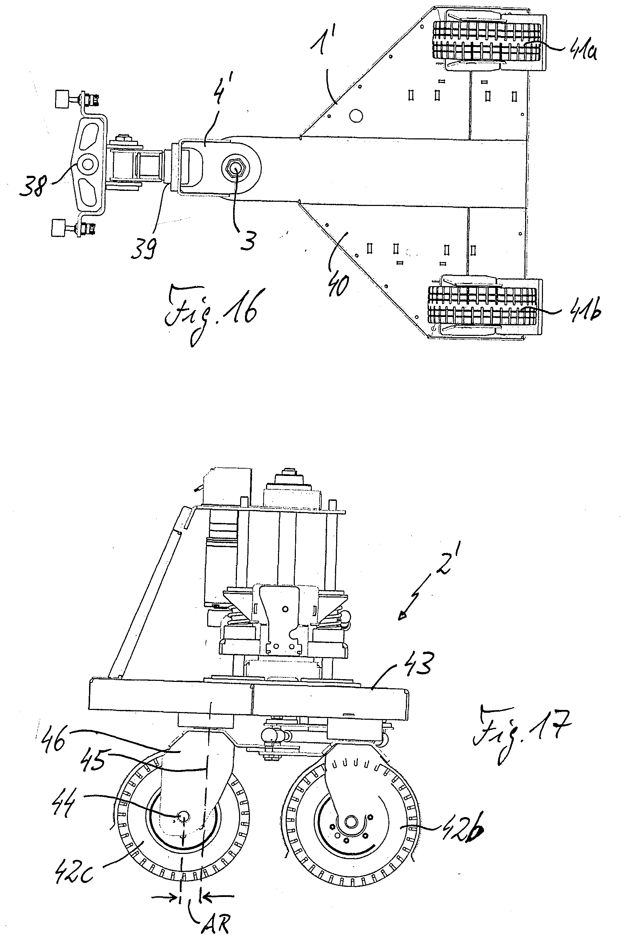

Fig. 16 veranschaulicht einen Fahrwerkteil 1', der speziell zur Verwendung als ein in einem entsprechenden Routenzug vorderster Fahrwerkteil eingerichtet ist, z.B. anstelle der vordersten Moduleinheit 35 im Ausführungsbeispiel von Fig. 15. Der vorderste Fahrwerkteil 1' weist vorne eine Anhängekupplung 38 zur Ankupplung an ein nicht gezeigtes Zugfahrzeug auf, die über eine Pendellagerung 39 mit einem Koppelmaul 4' verbunden ist, das um die Hochachse 3 schwenkbeweglich mit einer Plattform 40 gekoppelt ist. An der Unterseite der Plattform 40 sind zwei zugehörige Räder 41 a, 41 b montiert.

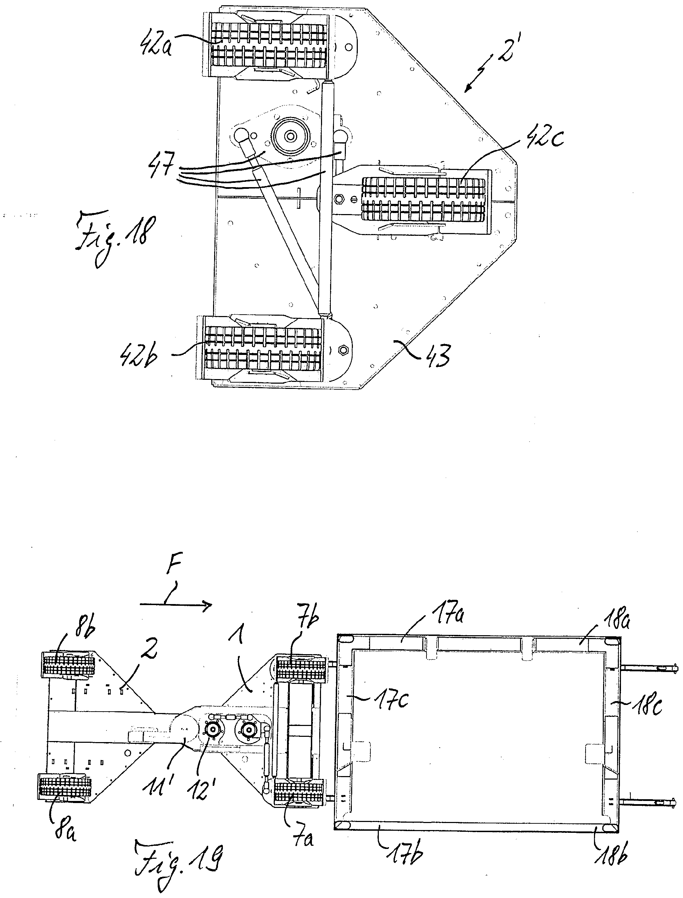

Die Fig. 17 und 18 veranschaulichen einen in einem erfindungsgemäßen Routenzug optional verwendbares letzten, hintersten Fahrwerkteil 2', z.B. als hinterster Fahrwerkteil der im gezeigten Routenzug von Fig. 15 hintersten Moduleinheit 35. Dieser optionale hinterste Fahrwerkteil 2' ist mit drei Rädern 42a, 42b, 42c ausgerüstet, die an der Unterseite einer Plattform 43 montiert sind, wobei sich zwei gelenkte Räder 42a, 42b auf gleicher Querhöhe gegenüberliegen und das dritte Rad 42c mittig dahinter angeordnet und als Nachlaufrad ausgebildet ist, indem seine Radachse 44 um einen vorgegebenen Abstand AR gegenüber einer vertikalen Drehachse 45 versetzt angeordnet ist, um die eine zugehörige Radaufhängung 46 drehbeweglich an der Plattform 43 angebracht ist. Über einen Lenkgestängemechanismus 47 werden die beiden vorderen, ebenfalls um eine vertikale Drehachse drehbeweglich an der Plattform 43 montierten Räder 42a, 42b durch die Drehbewegung des hinteren Nachlaufrades 42c um die Hochachse 45 gelenkt. Die Lenkung ist hier so gewählt, dass sich die beiden vorderen Räder 42a, 42b gleichsinnig zum hinteren Nachlaufrad 42c um ihre jeweilige Hochachse drehen, so dass alle drei Räder optimal einer Kurvenfahrt folgen können. Der Lenkmechanismus 47 umfasst einen Drehteller, einen ersten Lenkhebel zwischen Drehteller und Nachlaufrad 42c, einen zweiten Lenkhebel zwischen Drehteller und einem der beiden vorderen Räder 42a, 42b und eine Stange zwischen den beiden vorderen Rädern 42a, 42b.

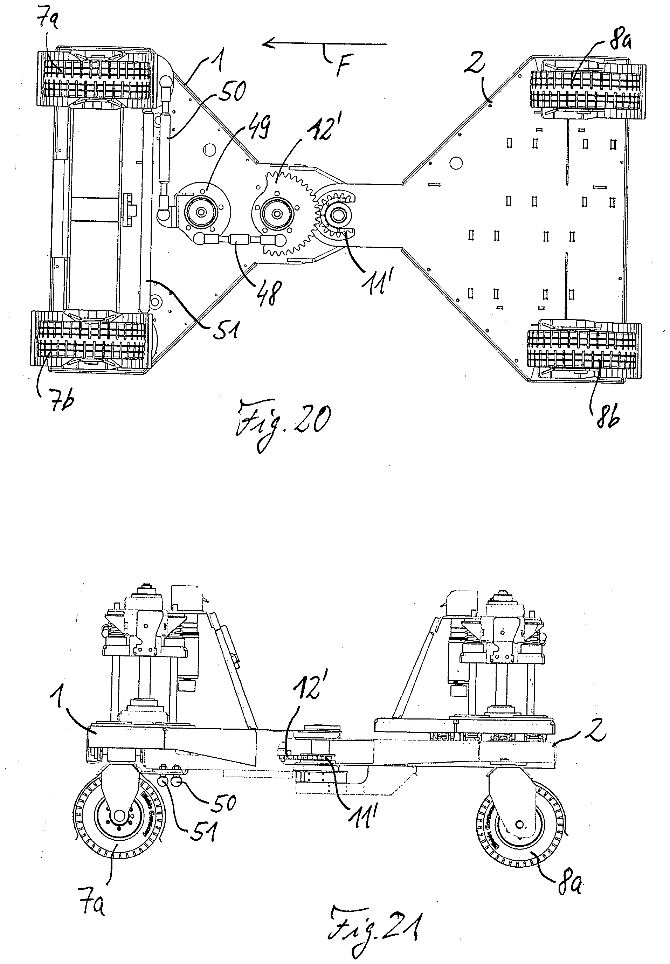

Die Fig. 19 bis 22 veranschaulichen eine weitere alternative Realisierung für den Lenkmechanismus zwischen jeweiligem Vorderwagen-Fahrwerkteil 1 und Hinterwagen-Fahrwerkteil 2. Dieser Lenkmechanismus ähnelt demjenigen des Beispiels der Fig. 5 und 6 mit einer Zahnscheibe bzw. einem Zahnrad 11' am Hinterwagen-Fahrwerkteil 2 und einer damit kämmenden Zahnscheibe 12' am Vorderwagen-Fahrwerkteil 1. Im Unterschied zum Ausführungsbeispiel der Fig. 5 und 6 wird in diesem Ausführungsbeispiel die Drehbewegung der Zahnscheibe 12' über eine Koppelstange 48 auf einen Drehteller 49 und von dort über eine Querstange 50 auf eines der beiden Vorderwagen-Hinterräder 7a, 7b übertragen, die ihrerseits über eine weitere Querstange 51 gekoppelt sind.

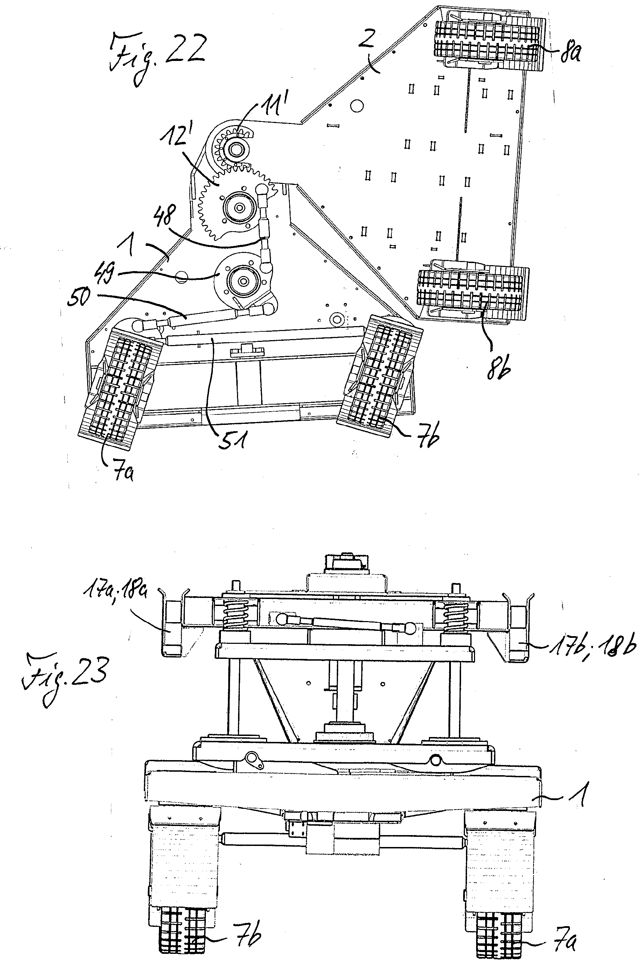

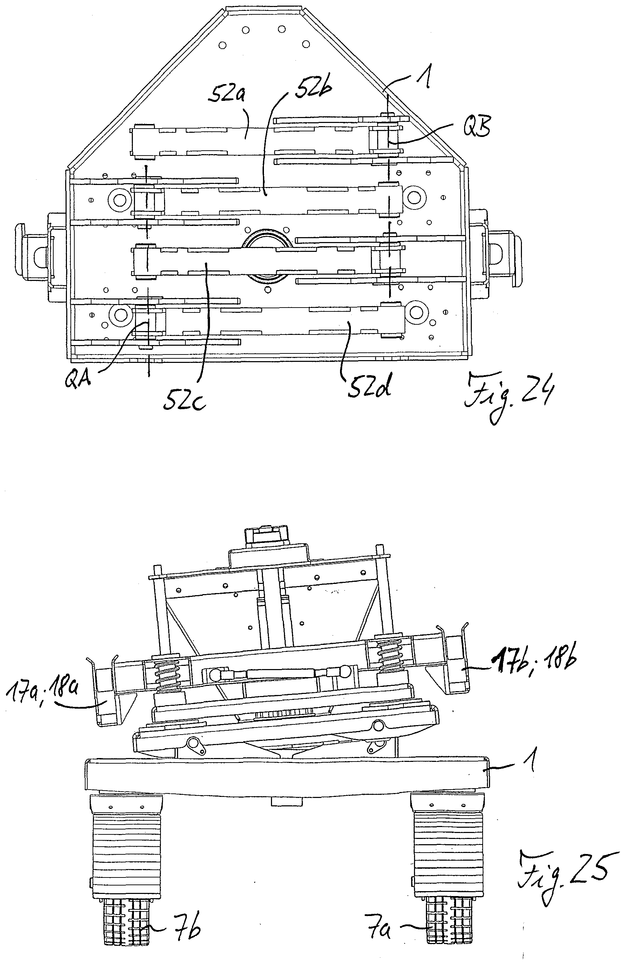

Wie in Fig. 19 dargestellt, sind ebenfalls wieder geeignete Lastaufnahmerahmenteile 17a, 17b, 17c, bzw. 18a, 18b, 18c mit dem jeweiligen Fahrwerkteil verbunden. In einer entsprechenden Variante, wie sie in den Fig. 23 bis 25 veranschaulicht ist, ist ein Doppelpendellager statt der oben erwähnten Pendelachslagerung vorgesehen. Dazu dient ein Abstützmechanismus mit vier Querträgern 52a bis 52d, die alternierend scherenartig um zwei horizontale Querachsen QA, QB verschwenkbar im linken bzw. rechten Seitenbereich des betreffenden Fahrwerkteils 1, 2 angebracht sind und mit denen ebenfalls alternierend die linksseitigen bzw. rechtsseitigen Lastaufnahmerahmenteile 17a, 17b, 18a, 18b gekoppelt sind. Verglichen mit der oben erwähnten Pendelachslagerung verhält sich der über dieses selbststabilisierende Doppelpendellager abgestützte Lastaufnahmerahmen stabiler bei Kurvenfahrt, und Bodenunebenheiten können problemlos ausgeglichen werden. Statt auf einer Pendelachse stützt sich der Rahmen auf einer linken und einer rechten Pendelachse ab, die den Rahmen unabhängig voneinander auspendeln können. Dies hat zur Folge, dass sich bei Bodenunebenheiten der jeweilige Lastaufnahmerahmen individuell gegenüber den Plattformen der zugehörigen Vorderwagen- und Hinterwagen-Fahrwerkteile 1, 2 neigen kann, wie in Fig. 25 veranschaulicht. Dabei zeigt Fig. 25 diese Neigungsstellung des Lastaufnahmerahmens 17a, 17b, 18a, 18b in einer in Richtung Plattform abgesenkten Stellung, während im Vergleich dazu Fig. 23 eine nicht geneigte Stellung in einer bezüglich der Plattformen angehobenen Lastaufnahmerahmenposition veranschaulicht.

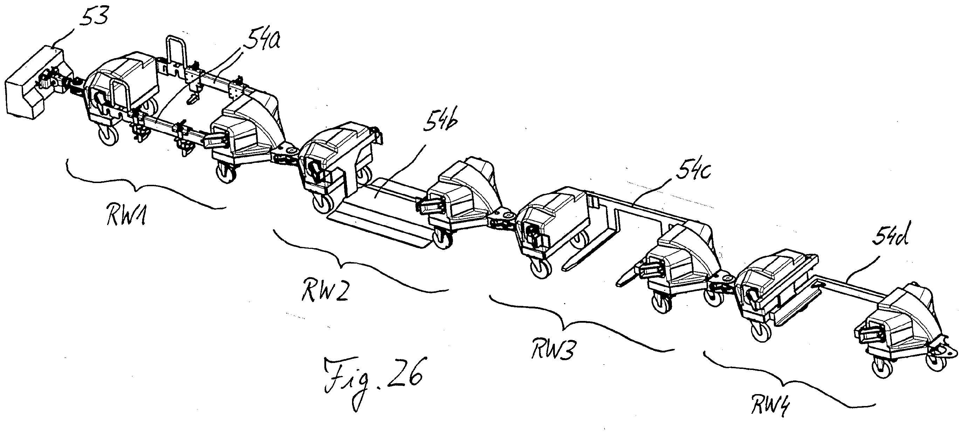

Für die konstruktive Ausführung der Lastaufnahmerahmen sind ebenfalls zahlreiche Varianten möglich. Fig. 26 zeigt exemplarisch einen Routenzug mit vier unterschiedlichen Lastaufnahmerahmentypen. Wie daraus ersichtlich, sind die verschiedenen Typen von Lastaufnahmerahmen in einem Routenzug beliebig kombinierbar, d.h. es kann an jeder Position im Routenzug jeder gewünschte Lastaufnahmerahmentyp zum Einsatz kommen. Speziell sind in Fig. 26 anschließend an eine Schleppereinheit ein erster Routenzugwagen RW1 mit einem geschlossenen Zweiarm-Lastaufnahmerahmen 54a, ein zweiter Routenzugwagen RW2 mit einem Lastaufnahmerahmen 54b von einem Tiefbetttyp, ein dritter Routenzugwagen RW3 mit einem gabelstaplerartigen, einseitig offenen Lastaufnahmerahmen 54c und ein vierter Routenzugwagen RW4 mit einem einseitig offenen, C-förmigen Lastaufnahmerahmen 54d gezeigt. Trotz unterschiedlicher Lastaufnahmerahmentypen können für die Routenzugwagen gleiche Vorderwagen- bzw. Hinterwagen-Fahrwerkteile verwendet werden.

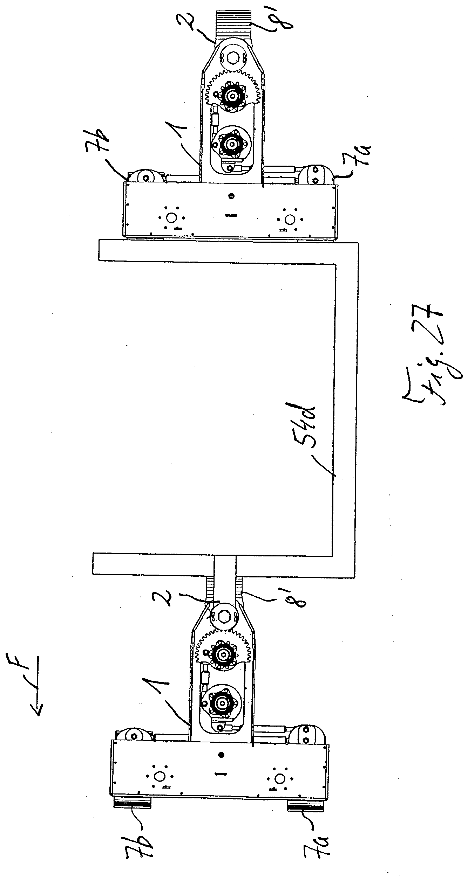

Die Fig. 27 bis 32 veranschaulichen einen mit einem C-förmigen Lastaufnahmerahmen 54d entsprechend demjenigen des vierten Wagens RW4 in Fig. 26 ausgerüsteten Routenzugwagen in einer vereinfachten Ausführungsvariante hinsichtlich der verwendeten Fahrwerkteile.

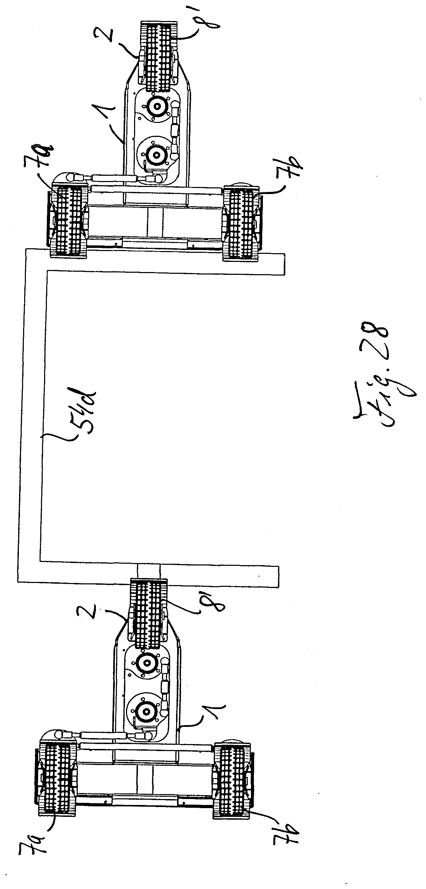

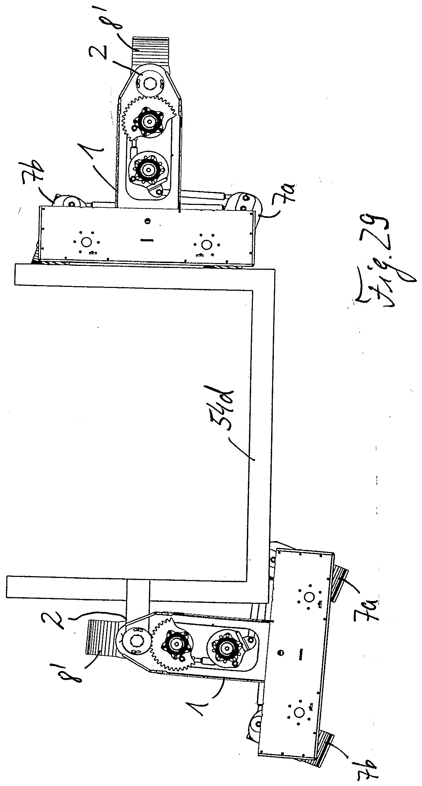

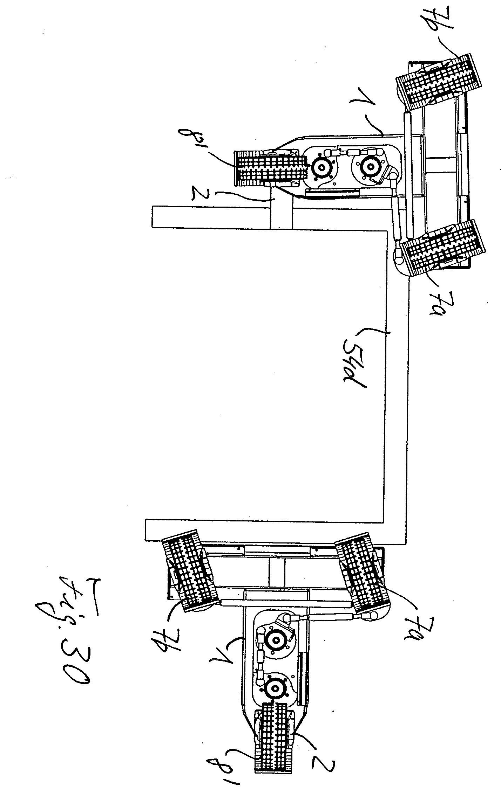

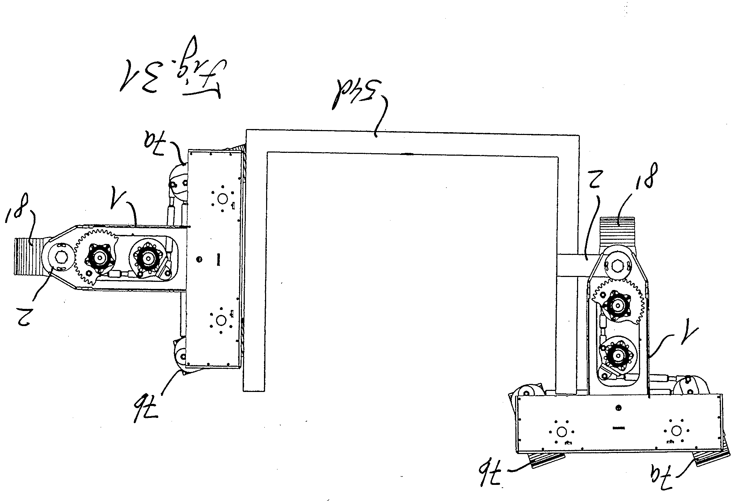

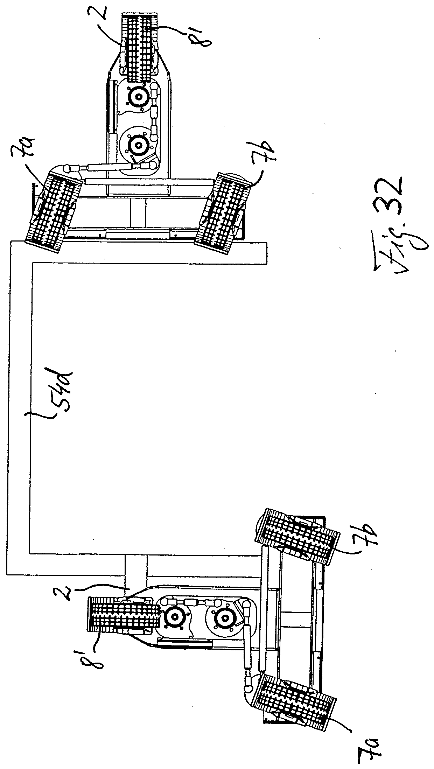

Speziell zeigt Fig. 27 den Routenzugwagen in Geradeausfahrt-Stellung von oben. Der Hinterwagen-Fahrwerkteil 2 ist in dieser Ausführungsvariante konstruktiv stark reduziert bzw. vereinfacht, wie gezeigt, und weist praktisch nur einen kurzen Längsträger mit einer Aufhängung für ein einzelnes Rad 8' auf. Die Lenkkopplung zwischen Vorderwagen-Fahrwerkteil 1 und Hinterwagen-Fahrwerkteil 2 entspricht derjenigen des Ausführungsbeispiels in den Fig. 19 bis 22. Fig. 28 zeigt den Wagen von unten. Die Fig. 29 und 30 zeigen den Routenzugwagen von oben bzw. von unten in einer extremen Linkskurven-Situation. Entsprechend zeigen die Fig. 31 und 32 den Routenzugwagen von oben bzw. von unten in einer extremen Rechtskurven-Situation.

Wie die obige Beschreibung vorteilhafter Ausführungsbeispiele deutlich macht, ermöglicht die Erfindung die Realisierung eines Routenzuges, der sich mit vergleichsweise geringem konstruktivem Aufwand fertigen lässt, hervorragende Fahreigenschaften hinsichtlich Spurtreue und Fahren in unebenem Gelände besitzt und sich für den Transport unterschiedlich großer Lasten verstellen lässt.

## Patentansprüche

1. Routenzug-Moduleinheit zum Aufbau eines Routenzugs aus mehreren solchen lösbar hintereinander gekoppelten Moduleinheiten, mit
- einer Fahrwerkeinheit mit einem Vorderwagen-Fahrwerkteil (1) mit wenigstens einem Vordenivagen-Hinterrad (7a, 7b), einem Hinterwagen-Fahrwerkteil (2) mit wenigstens einem Hinterwagen-Vorderrad (8a, 8b), wobei das Hinterwagen-Fahrwerkteil um eine Hochachse (3) drehbeweglich mit dem Vorderwagen-Fahrwerkteil gekoppelt ist, und einem Lenkmechanismus (11 bis 15), der zum Lenken des wenigstens einen Vorderwagen-Hinterrades (7a, 7b) in Abhängigkeit von der Drehstellung des Hinterwagen-Fahrwerkteils (2) relativ zum Vorderwagen-Fahrwerkteil (1) bezüglich der Hochachse (3) eingerichtet ist,
- einem sich auf dem Vorderwagen-Fahrwerkteil (1) abstützenden hinteren Vorderwagen-Lastaufnahmerahmenteil (17),
- einem sich auf dem Hinterwagen-Fahrwerkteil (2) abstützenden vorderen Hinterwagen-Lastaufnahmerahmenteil (18) und
- Rahmenkopplungsmitteln (31, 32) zum lösbaren Koppeln des hinteren Vorderwagen-Lastaufnahmerahmenteils mit dem vorderen Hinterwagen-Lastaufnahmerahmenteil einer im Routenzug davor anzukoppelnden Moduleinheit, um einen Vorderwagen-Lastaufnahmerahmen zu bilden, und zum lösbaren Koppeln des vorderen Hinterwagen-Lastaufnahmerahmenteils mit dem hinteren Vorderwagen-Lastaufnahmerahmenteil einer im Routenzug dahinter anzukoppelnden Moduleinheit, um einen Hinterwagen-Lastaufnahmerahmen zu bilden.

2. Routenzug-Moduleinheit nach Anspruch 1, weiter **dadurch gekennzeichnet, dass** der Lenkmechanismus dafür eingerichtet ist, für das wenigstens eine Vorderwagen-Hinterrad einen zum Drehwinkel (α_{R}, α_{L}) des Vorderwagen-Fahrwerkteils relativ zum Hinterwagen-Fahrwerkteil bezüglich der Hochachse gegensinnigen Lenkwinkel (β_{L}, β_{R}) einzustellen.

3. Routenzug-Moduleinheit nach Anspruch 1 oder 2, weiter **dadurch gekennzeichnet, dass** der Lenkmechanismus ein Lenkgestänge (11 bis 15) beinhaltet, das einerseits mit dem wenigstens einen Vorderwagen-Hinterrad und andererseits mit dem Hinterwagen-Fahrwerkteil verbunden ist.

4. Routenzug-Moduleinheit nach einem der Ansprüche 1 bis 3, weiter **dadurch gekennzeichnet, dass** der Vorderwagen-Fahrwerkteil zwei parallele, mit dem Lenkmechanismus gekoppelte Vorderwagen-Hinterräder (7a, 7b) aufweist und/oder das Hinterwagen-Fahrwerkteil zwei parallele, ungelenkte Hinterwagen-Vorderräder (8a, 8b) aufweist.

5. Routenzug-Moduleinheit nach Anspruch 4, weiter **dadurch gekennzeichnet, dass** die beiden Hinterwagen-Vorderräder des Hinterwagen-Fahrwerkteils an einer Pendelachse (10) aufgehängt sind.

6. Routenzug-Moduleinheit nach einem der Ansprüche 1 bis 5, weiter **dadurch gekennzeichnet, dass** der Hinterwagen-Fahrwerkteil um eine horizontale Längsachse (6a) kippbeweglich mit dem Vorderwagen-Fahrwerkteil gekoppelt ist.

7. Routenzug-Moduleinheit nach einem der Ansprüche 1 bis 6, weiter **dadurch gekennzeichnet, dass** der vordere Hinterwagen-Lastaufnahmerahmenteil zwei seitliche, um eine Querachse (23) schwenkbewegliche vordere Hinterwagen-Rahmenlängsträger (18a, 18b) aufweist und/oder der hintere Vorderwagen-Lastaufnahmerahmenteil zwei seitliche, um eine Querachse (19) schwenkbewegliche hintere Vorderwagen-Rahmenlängsträger (17a, 17b) aufweist.

8. Routenzug-Moduleinheit nach Anspruch 7, weiter **dadurch gekennzeichnet, dass** die Rahmenkopplungsmittel ein jeweiliges Koppelelement zum lösbaren Koppeln des vorderen und des hinteren Rahmenlängsträgers mit einem hinteren bzw. vorderen Rahmenlängsträger einer im Routenzug benachbarten Moduleinheit aufweisen.

9. Routenzug-Moduleinheit nach Anspruch 7 oder 8, weiter **dadurch gekennzeichnet, dass** der vordere Hinterwagen-Rahmenlängsträger und/oder der hintere Vorderwagen-Rahmenlängsträger teleskopartig längenverstellbar ausgeführt ist.

10. Routenzug-Moduleinheit nach einem der Ansprüche 7 bis 9, weiter **dadurch gekennzeichnet, dass** der hintere Vorderwagen-Lastaufnahmerahmenteil und/oder der vordere Hinterwagen-Lastaufnahmerahmenteil einen oder mehrere Lastaufnahmearme (29) aufweist, die lösbar und/oder längsverschieblich am hinteren Vorderwagen-Rahmenlängsträger und/oder am vorderen Hinterwagen-Rahmenlängsträger gehalten sind.

11. Routenzug-Moduleinheit nach einem der Ansprüche 7 bis 10, weiter **dadurch gekennzeichnet, dass** der hintere Vorderwagen-Lastaufnahmerahmenteil und/oder der vordere Hinterwagen-Lastaufnahmerahmenteil einen teleskopartig längenverstellbaren Rahmenquerträger (17c, 18c) aufweist, an dem die zugehörigen Rahmenlängsträger um die Querachse schwenkbeweglich angelenkt sind.

12. Routenzug-Moduleinheit nach Anspruch 11, weiter **dadurch gekennzeichnet, dass** sich der Rahmenquerträger (17c) des hinteren Vorderwagen-Lastaufnahmerahmenteils hinter einer Radachse des Vorderwagen-Fahrwerkteils (1) auf diesem abstützt und/oder sich der Rahmenquerträger (18c) des vorderen Hinterwagen-Lastaufnahmerahmenteils vor einer Radachse des Hinterwagen-Fahrwerkteils (2) auf diesem abstützt.

13. Routenzug-Moduleinheit nach einem der Ansprüche 1 bis 12, weiter **dadurch gekennzeichnet, dass** sich der hintere Vorderwagen-Lastaufnahmerahmenteil über einen Hubmechanismus (20) höhenbeweglich am Vorderwagen-Fahrwerkteil (1) abstützt und/oder sich der vordere Hinterwagen-Lastaufnahmerahmenteil über einen Hubmechanismus (24) höhenbeweglich am Hinterwagen-Fahrwerkteil (2) abstützt.

14. Routenzug-Moduleinheit nach einem der Ansprüche 1 bis 13, weiter **dadurch gekennzeichnet, dass** die Rahmenkopplungsmittel elektrische Verbindungsmittel (34) zum elektrischen Kontaktieren wenigstens einer am hinteren Vorderwagen-Lastaufnahmerahmenteil oder am vorderen Hinterwagen-Lastaufnahmerahmenteil vorgesehenen elektrischen Leitung mit wenigstens einer elektrischen Leitung, die an einem damit zu koppelnden Lastaufnahmerahmenteil einer anzukoppelnden Moduleinheit vorgesehen ist, gleichzeitig mit dem Koppeln der betreffenden Lastaufnahmerahmenteile aufweisen.

## Claims

1. Load train modular unit for the setup of a load train composed of a plurality of such modular units releasably coupled in succession, comprising
- a chassis unit having a front carriage chassis part (1) including at least one front carriage rear wheel (7a, 7b), a rear carriage chassis part (2) including at least one rear carriage front wheel (8a, 8b), wherein the rear carriage chassis part is coupled to the front carriage chassis part to be pivotable about a vertical axis (3), and a steering mechanism (11 to 15), configured for steering the at least one front carriage rear wheel (7a, 7b) as a function of the pivoted position of the rear carriage chassis part (2) relative to the front carriage chassis part (1) in relation to the vertical axis (3),
- a rearward front carriage load-bearing frame part (17) supporting on the front carriage chassis part (1),
- a frontward rear carriage load-bearing frame part (18) supporting on the rear carriage chassis part (2), and
- frame coupling means (31, 32) for releasable coupling of the rearward front carriage load-bearing frame part to the frontward rear carriage load-bearing frame part of a modular unit to be coupled to the load train before it, in order to form a front carriage load-bearing frame, and for releasable coupling of the frontward rear carriage load-bearing frame part to the rearward front carriage load-bearing frame part of a modular unit to be coupled to the load train behind it, in order to form a rear carriage load-bearing frame.

2. Load train modular unit according to claim 1, further **characterized in that** the steering mechanism is configured to adjust a steering angle (ß_{L}, ß_{R}) inversely arranged in relation to the pivot angle (α_{R}, α_{L}) of the front carriage chassis part relative to the rear carriage chassis part and to the vertical axis, for the at least one front carriage rear wheel.

3. Load train modular unit according to claim 1 or 2, further **characterized in that** the steering mechanism includes a steering linkage (11 to 15) which is connected to the at least one front carriage rear wheel on the one hand side and to the rear carriage chassis part on the other hand side.

4. Load train modular unit according to any of claims 1 to 3, further **characterized in that** the front carriage chassis part includes two parallel front carriage rear wheels (7a, 7b) coupled to the steering mechanism and/or the rear carriage chassis part includes two parallel, non-steered rear carriage front wheels (8a, 8b).

5. Load train modular unit according to claim 4, further **characterized in that** the two rear carriage front wheels of the rear carriage chassis part are suspended on a floating axle (10).

6. Load train modular unit according to any of claims 1 to 5, further **characterized in that** the rear carriage chassis part is coupled to the front carriage chassis part to be tiltable about a horizontal longitudinal axis (6a).

7. Load train modular unit according to any of claims 1 to 6, further **characterized in that** the frontward rear carriage load-bearing frame part includes two lateral, frontward rear carriage frame longitudinal beams (18a, 18b) pivotable about a cross axis (23) and/or the rearward front carriage load-bearing frame part includes two lateral, rearward front carriage frame longitudinal beams (17a, 17b) pivotable about a cross axis (19).

8. Load train modular unit according to claim 7, further **characterized in that** each of the frame coupling means has a respective coupling element for releasable coupling of the frontward and the rearward frame longitudinal beams to a rearward and a frontward frame longitudinal beam, respectively, of an adjacent modular unit in the load train.

9. Load train modular unit according to claim 7 or 8, further **characterized in that** the frontward rear carriage frame longitudinal beam and/or the rearward front carriage frame longitudinal beam are configured for telescopic length adjusting.

10. Load train modular unit according to any of claims 7 to 9, further **characterized in that** the rearward front carriage load-bearing frame part and/or the frontward rear carriage load-bearing frame part include one or more load-bearing arms (29), which are held releasably and/or lengthwise shiftable on the rearward front carriage frame longitudinal beam and/or on the frontward rear carriage frame longitudinal beam.

11. Load train modular unit according to any of claims 7 to 10, further **characterized in that** the rearward front carriage load-bearing frame part and/or the frontward rear carriage load-bearing frame part include a telescopic length adjustable frame cross beam (17c, 18c), on which the respective frame longitudinal beams are articulated to be pivotable about the cross axis.

12. Load train modular unit according to claim 11, further **characterized in that** the frame cross beam (17c) of the rearward front carriage load-bearing frame part is supported behind a wheel axle of the front carriage chassis part (1) on the latter and/or the frame cross beam (18c) of the frontward rear carriage load-bearing frame part is supported in front of a wheel axle of the rear carriage chassis part (2) on the latter.

13. Load train modular unit according to any of claims 1 to 12, further **characterized in that** the rearward front carriage load-bearing frame part is supported on the front carriage chassis part (1) via a lifting mechanism (20) in a height-variable manner and/or the frontward rear carriage load-bearing frame part is supported on the rear carriage chassis part (2) via a lifting mechanism (24) in a height-variable manner.

14. Load train modular unit according to any of claims 1 to 13, further **characterized in that** the frame coupling means include electric connecting means (34) for electric contacting of at least one electric line provided on the rearward front carriage load-bearing frame part or on the frontward rear carriage load-bearing frame part with at least one electric line provided on a load-bearing frame part to be coupled therewith of a modular unit to be coupled, simultaneously with the coupling of the respective load-bearing frame parts.

## Revendications

1. Unité modulaire de convoi routier servant à former un convoi routier constitué de plusieurs de ces unités modulaires accouplées les unes derrière les autres de manière libérable, l'unité modulaire présentant
- une unité de train de roulement présentant une partie (1) de train de roulement de voiture avant dotée d'au moins une roue arrière (7a, 7b) de voiture avant et une partie (2) de train de roulement de voiture arrière dotée d'au moins une roue avant (8a, 8b) de voiture arrière,
la partie de train de roulement de voiture arrière étant accouplée à la partie de train de roulement de voiture avant à rotation autour d'un axe vertical (3),
un mécanisme de braquage (11 à 15) conçu pour orienter autour de l'axe vertical (3) la ou les roues arrière (7a, 7b) de voiture avant en fonction de la position en rotation de la partie (2) de train de roulement de voiture arrière par rapport à la partie (1) de train de roulement de voiture avant,
- une partie arrière (17) de châssis de reprise de charge de voiture avant qui s'appuie sur la partie (1) du train de roulement de voiture avant,
- une partie avant (18) de châssis de reprise de charge de voiture arrière qui s'appuie sur la partie (2) de train de roulement de voiture arrière et
- des moyens (31, 32) d'accouplement de châssis permettant d'accoupler de manière libérable la partie arrière du châssis de reprise de charge de voiture avant et la partie avant du châssis de reprise de charge de voiture arrière d'une unité modulaire à accoupler en avant dans le convoi routier, pour former un châssis de reprise de charge de voiture avant, et pour accoupler de manière libérable la partie avant du châssis de reprise de charge de voiture arrière à la partie arrière du châssis de reprise de charge de voiture avant d'une unité modulaire arrière à accoupler en arrière dans le convoi routier pour former un châssis de reprise de charge de voiture arrière.

2. Unité modulaire de convoi routier selon la revendication 1, **caractérisée en outre en ce que** le mécanisme de braquage est conçu pour que par rapport à la partie de train de roulement de voiture arrière, la ou les roues arrière de voiture avant forment autour de l'axe vertical un angle de braquage (β_{L}, β_{R}) opposé à l'angle de rotation (α_{R}, α_{L}) de la partie de train de roulement de voiture avant.

3. Unité modulaire de convoi routier selon les revendications 1 ou 2, **caractérisée en ce que** le mécanisme de braquage contient une tringle articulée (11 à 15) reliée d'une part à au moins une roue arrière de voiture avant et d'autre part à la partie de train de roulement de voiture arrière.

4. Unité modulaire de convoi routier selon l'une des revendications 1 à 3, **caractérisée en outre en ce que** la partie de train de roulement de voiture avant présente deux roues arrière (7a, 7b) de voiture avant parallèles et accouplées au mécanisme de braquage et/ou **en ce que** la partie de train de roulement de voiture arrière présente deux roues avant (8a, 8b) parallèles non directrices de voiture arrière.

5. Unité modulaire de convoi routier selon la revendication 4, **caractérisée en outre en ce que** les deux roues avant de voiture arrière de la partie de train de roulement de voiture arrière sont suspendues sur un axe pendulaire (10).

6. Unité modulaire de convoi routier selon l'une des revendications 1 à 5, **caractérisée en outre en ce que** la partie de train de roulement de voiture arrière est accouplée à la partie de train de roulement de voiture avant de manière à pouvoir basculer autour d'un axe longitudinal horizontal (6a).

7. Unité modulaire de convoi routier selon l'une des revendications 1 à 6, **caractérisée en outre en ce que** la partie avant du châssis de reprise de charge de voiture arrière présente deux supports longitudinaux latéraux avant (18a, 18b) de châssis de voiture arrière aptes à pivoter autour d'un axe transversal (23) et/ou **en ce que** la partie arrière de châssis de reprise de charge de voiture avant présente deux supports longitudinaux latéraux arrière (17a, 17b) de voiture avant aptes à pivoter autour d'un axe transversal (19).

8. Unité modulaire de convoi routier selon la revendication 7, **caractérisée en outre en ce que** le moyen d'accouplement de châssis présente un élément respectif d'accouplement qui permet d'accoupler de manière libérable le support longitudinal avant et le support longitudinal arrière de châssis à un support longitudinal arrière ou à un support longitudinal avant de châssis d'une unité modulaire voisine dans le convoi routier.

9. Unité modulaire de convoi routier selon l'une des revendications selon les revendications 7 ou 8, **caractérisée en outre en ce que** le support longitudinal avant du châssis de voiture arrière et/ou le support longitudinal arrière du châssis de voiture avant sont ajustables télescopiquement en longueur.

10. Unité modulaire de convoi routier selon l'une des revendications 7 à 9, **caractérisée en outre en ce que** la partie arrière du châssis de reprise de charge de voiture avant et/ou la partie avant du châssis de reprise de charge de voiture arrière présentent un ou plusieurs bras (29) de reprise de charge qui sont maintenus de manière libérable et/ou de manière coulissant en longueur sur le support longitudinal arrière du châssis de voiture avant et/ou sur le support longitudinal avant du châssis de voiture arrière.

11. Unité modulaire de convoi routier selon l'une des revendications 7 à 10, **caractérisée en outre en ce que** la partie arrière du châssis de reprise de charge de voiture avant et/ou la partie avant du châssis de reprise de charge de voiture arrière présentent un support transversal de châssis (17c, 18c) ajustable télescopiquement en longueur sur lequel les supports longitudinaux du châssis associés sont articulés à pivotement autour de l'axe transversal.

12. Unité modulaire de convoi routier selon la revendication 11, **caractérisée en outre en ce que** le support transversal (17c) de la partie arrière du châssis de reprise de charge de voiture avant s'appuie sur ce dernier en arrière d'un essieu de roue de la partie (1) de train de roulement de voiture avant et/ou **en ce que** le support transversal (18c) de la partie avant du châssis de reprise de charge de voiture arrière s'appuie sur ce dernier en avant d'un essieu de roue de la partie (2) de train de roulement de voiture arrière.

13. Unité modulaire de convoi routier selon l'une des revendications 1 à 12, **caractérisée en outre en ce que** la partie arrière de châssis de reprise de charge de voiture avant s'appuie sur la partie (1) de châssis de voiture avant de manière déplaçable en hauteur par l'intermédiaire d'un mécanisme de levage (20) et/ou **en ce que** la partie avant de châssis de reprise de charge de voiture arrière s'appuie sur la partie (2) de train de roulement de voiture arrière de manière ajustable en hauteur par l'intermédiaire d'un mécanisme de levage (24).

14. Unité modulaire de convoi routier selon l'une des revendications 1 à 13, **caractérisée en outre en ce que** les moyens d'accouplement de châssis présentent des moyens (34) de raccordement électrique qui assurent un contact électrique entre au moins un conducteur électrique prévu sur la partie arrière du châssis de reprise de charge de voiture avant ou sur la partie avant du châssis de reprise de charge de voiture arrière avec au moins un conducteur électrique prévu sur une partie à accoupler du châssis de reprise de charge d'une unité modulaire à accoupler en même temps que l'accouplement des parties concernées des châssis de reprise de charge.
